(19) Europäisches Patentamt
European Patent Office
Office européen des brevets

(11) **EP 2 196 378 B1**

(12) **EUROPEAN PATENT SPECIFICATION**

(45) Date of publication and mention of the grant of the patent:
**12.09.2012 Bulletin 2012/37**

(21) Application number: **07830057.1**

(22) Date of filing: **18.10.2007**

(51) Int Cl.:
***B61K 9/12*** (2006.01) ***G01B 7/12*** (2006.01)
***H02P 21/00*** (2006.01) ***H02P 27/04*** (2006.01)
***B60L 9/12*** (2006.01)

(86) International application number:
**PCT/JP2007/070323**

(87) International publication number:
**WO 2009/050804 (23.04.2009 Gazette 2009/17)**

(54) **WHEEL DIAMETER MEASURING INSTRUMENT FOR ELECTRIC VEHICLE**
RADDURCHMESSERMESSINSTRUMENT FÜR ELEKTROFAHRZEUGE
INSTRUMENT DE MESURE DE DIAMÈTRE DE ROUE POUR VÉHICULE ÉLECTRIQUE

(84) Designated Contracting States:
**AT BE BG CH CY CZ DE DK EE ES FI FR GB GR HU IE IS IT LI LT LU LV MC MT NL PL PT RO SE SI SK TR**

(43) Date of publication of application:
**16.06.2010 Bulletin 2010/24**

(73) Proprietor: **Mitsubishi Electric Corporation**
**Tokyo 100-8310 (JP)**

(72) Inventors:
- **KONO, Masaki**
**Tokyo 100-8310 (JP)**
- **KITANAKA, Hidetoshi**
**Tokyo 100-8310 (JP)**

(74) Representative: **Popp, Eugen**
**Meissner, Bolte & Partner GbR**
**Postfach 86 06 24**
**81633 München (DE)**

(56) References cited:
**EP-A1- 1 197 419** **CH-A5- 688 728**
**DE-A1- 10 102 673** **DE-A1-102004 012 167**
**DE-A1-102004 041 804** **JP-A- 60 210 101**
**JP-A- 2005 065 410** **JP-A- 2005 312 126**
**JP-A- 2006 033 911** **US-A- 4 155 526**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 196 378 B1

## Description

### Technical Field

This invention relates to a wheel diameter measuring apparatus of an electric vehicle, and particularly is a wheel diameter measuring apparatus of an electric vehicle used in an electric automobile, a railroad vehicle, etc. to which a synchronous motor is applied.

### Background Art

The features of the preamble of claim 1 are disclosed in document CH-A-688728.
In wheels of an electric vehicle, a minute diameter difference between each of the wheels occurs by wear during travel and in the case of assuming that torque of an electric motor is constant, acceleration of the wheel whose diameter has become small becomes large apparently. In order to stably control the electric vehicle in which acceleration and deceleration change apparently, estimating and correcting a wheel diameter from a rotational speed of each of the wheels has been implemented conventionally (for example, see Patent Reference 1).
On the other hand, from the standpoint of improvement in maintainability, reliability or miniaturization, a speed sensor for detecting a rotational speed of a driving shaft of an electric motor for driving an electric vehicle is not used in speed sensorless vector control applied to the electric vehicle in recent years. As a result, correcting a wheel diameter by estimating a rotational speed for a predetermined time while a torque current command increases or decreases has been proposed (for example, see Patent Reference 2).
Patent Reference 1: JP-A-60-210101 (Fig. 1)
Patent Reference 2: JP-A-2005-312126 (Page 6, Fig. 1)

### Disclosure of the Invention

### Problems that the Invention is to Solve

In the conventional wheel diameter measuring apparatus used in correction of a wheel diameter, it is premised on the case of applying an induction motor to an electric vehicle and particularly in speed sensorless vector control, a rotational speed of a driving shaft is estimated using a slip frequency peculiar to the induction motor, so that it could not be used as it is in an electric vehicle to which, for example, a synchronous motor is applied.
That is, in the electric vehicle of the speed sensorless vector control driven by the synchronous motor, a conventional wheel diameter estimation method could not be applied and there was a problem of being difficult to implement electric vehicle control similar to the case of applying the induction motor.
The invention has been implemented to solve the problem as described above, and an object of the invention is to provide a wheel diameter measuring apparatus capable of accurately measuring a wheel diameter of an electric vehicle capable of being supplied to a wheel diameter correction particularly in an electric vehicle of speed sensorless vector control to which a synchronous motor is applied.

### Means for Solving the Problems

The invention is defined by the features of claim 1. A wheel diameter measuring apparatus of an electric vehicle according to the invention is an apparatus for measuring a wheel diameter of an electric vehicle comprising a synchronous motor driven by an electric power converter for converting a DC voltage into an AC voltage, and comprises a voltage detector for detecting an AC voltage generated by a magnetic field of the synchronous motor during coasting of the electric vehicle in which the electric power converter stops, and a calculation part for calculating a wheel diameter of a wheel driven by the synchronous motor from an AC voltage detected by the voltage detector and speed information about the electric vehicle. Advantage of the Invention
According to a wheel diameter measuring apparatus of the invention, particularly in an electric vehicle of speed sensorless vector control to which a synchronous motor is applied, a wheel diameter can be measured accurately, so that stable control of the electric vehicle can be performed.

### Brief Description of the Drawings

[Fig. 1] Fig. 1 is a configuration diagram of a wheel diameter measuring apparatus of an electric vehicle according to a first embodiment of the invention.

[Fig. 2] Fig. 2 is a configuration diagram of a calculation part according to the first embodiment of the invention.

[Fig. 3] Fig. 3 is a configuration diagram of an offset compensator according to the first embodiment of the invention.

[Fig. ] Fig. 4 is an operation diagram showing an operation of the offset compensator according to the first embodiment of the invention.

[Fig. 5] Fig. 5 is a configuration diagram of a speed calculator according to the first embodiment of the invention.

[Fig. 6] Fig. 6 is a configuration diagram of a wheel diameter calculator according to the first embodiment of the invention.

[Fig. 7] Fig. 7 is a configuration diagram of a failure detector according to the first embodiment of the invention.

[Fig. 8] Fig. 8 is an operation diagram showing an operation of the failure detector according to the first embodiment of the invention.

[Fig. 9] Fig. 9 is a configuration diagram of a calculation part of a wheel diameter measuring apparatus according to a second embodiment of the invention.

[Fig. 10] Fig. 10 is a configuration diagram of a speed calculator according to the second embodiment of the invention.

[Fig. 11] Fig. 11 is a configuration diagram of a failure detector according to the second embodiment of the invention.

[Fig.12] Fig. 12 is a configuration diagram of a wheel diameter measuring apparatus of an electric vehicle according to a third embodiment of the invention.

[Fig. 13] Fig. 13 is a configuration diagram of a calculation part according to the third embodiment of the invention.

[Fig. 14] Fig. 14 is a configuration diagram of a speed calculator according to the third embodiment of the invention.

[Fig. 15] Fig. 15 is a configuration diagram of a failure detector according to the third embodiment of the invention.

[Fig. 16] Fig. 16 is another configuration diagram of the wheel diameter measuring apparatus of the electric vehicle according to the third embodiment of the invention.

[Fig. 17] Fig. 17 is a configuration diagram of a wheel diameter measuring apparatus of an electric vehicle according to a fourth embodiment of the invention.

[Fig. 18] Fig. 18 is a configuration diagram of a wheel diameter correcting part according to the fourth embodiment of the invention.

Description of Reference Numerals and Signs

| | |
|---|---|
| 1 | ELECTRIC POWER CONVERTER |
| 1u,1v,1w | CONNECTING TERMINAL |
| 2 | SYNCHRONOUS MOTOR |
| 2u,2v,2w | CONNECTING TERMINAL |
| 3,3a,3b | WHEEL DIAMETER MEASURING APPARATUS |
| 4,4a,4b,4c | VOLTAGE DETECTOR |
| 5,5a,5b | CALCULATION PART |
| 6 | PANTOGRAPH |
| 7a,7b | WHEEL |
| 8 | SPEED DETECTOR |
| 9,9u,9v,9w | WIRING |
| 10,10a,10b | FILTER |
| 20,20a,20b | OFFSET COMPENSATOR |
| 21 | OFFSET AMOUNT CALCULATOR |
| 22 | STOP DECIDING DEVICE |
| 23 | STOP TIME MEASURING DEVICE |
| 24a,24b | SWITCHING DEVICE |
| 25 | INTEGRATOR |
| 26 | DIVIDER |
| 27 | SUBTRACTER |
| 30 | SPEED CALCULATOR |
| 31 | TWO-TIME DIFFERENTIATOR |
| 32 | DIVIDER |
| 33 | MULTIPLIER |
| 34 | SQUARE ROOT DEVICE |
| 35 | FILTER |

| | |
|---|---|
| 40 | WHEEL DIAMETER CALCULATOR |
| 41 | DIVIDER |
| 42 | MULTIPLIER |
| 50 | FAILURE DETECTOR |
| 51a,51b,51c,51d,51e | ABSOLUTE VALUE DEVICE |
| 52,52a,52b | FILTER |
| 53,53a,53b | LESS-THAN COMPARATOR |
| 54 | GREATER-THAN COMPARATOR |
| 55,55a,55b | LOGICAL PRODUCT (AND) DEVICE |
| 60 | SPEED CALCULATOR |
| 61a,61b | TWO-TIME DIFFERENTIATOR |
| 62 | MULTIPLIER |
| 63 | MULTIPLIER |
| 64 | SQUARE ROOT DEVICE |
| 65 | FILTER |
| 70 | FAILURE DETECTOR |
| 71 | LESS-THAN COMPARATOR |
| 80 | SPEED CALCULATOR |
| 81 | αβ CONVERTER |
| 82a,82b | MULTIPLIER |
| 83 | ADDER |
| 84 | SQUARE ROOT DEVICE |
| 85 | DIVIDER |
| 90 | FAILURE DETECTOR |
| 91 | LOGICAL PRODUCT (AND) DEVICE |
| 100 | WHEEL DIAMETER CORRECTING PART |
| 101 | DIVIDER |
| 102 | LIMITER |
| 103 | MULTIPLIER |
| 110 | CONTROLLER |

Best Mode for Carrying Out the Invention

First embodiment

The invention will hereinafter be described in detail based on the drawings showing its embodiment.

Fig. 1 is a configuration diagram showing a configuration of a wheel diameter measuring apparatus of an electric vehicle in the first embodiment of the invention. In Fig. 1, an electric power converter 1 converts a DC voltage supplied from a pantograph 6 into an AC voltage, and supplies the voltage to a synchronous motor 2. In the present embodiment, the synchronous motor 2 shall be a permanent magnet synchronous motor for producing a magnetic field by a permanent magnet attached to a rotor, but is not limited to this. A wheel diameter measuring apparatus 3 is made of a voltage detector 4 for detecting an AC voltage of this electric power converter 1 and the synchronous motor 2, and a calculation part 5 for calculating a wheel diameter by the detected AC voltage.

A wheel 7b is a drive wheel connected to the synchronous motor 2 through a gear and an axle (not shown), and a wheel 7a is a non-drive wheel which is not connected to the synchronous motor 2 directly, and is equipped with a speed detector 8 for detecting a speed of this non-drive wheel. This speed detector 8 may be a speed detector disposed in a security device or a brake device which is not connected to the synchronous motor 2, or a speed detector for measuring a vehicle speed for a speed meter of a cab in the front vehicle in the case of, for example, an electric vehicle.

Respective connecting terminals 1u, 1v, 1w of a U phase, a V phase, a W phase of the AC side of the electric power converter 1 are connected to respective connecting terminals 2u, 2v, 2w of a U phase, a V phase, a W phase of the synchronous motor 2 by wiring 9 (made of 9u, 9v, 9w). Here, the voltage detector 4 is connected to the U phase connecting terminal 1u and the V phase connecting terminal 1v of the AC side of the electric power converter, and detects a line voltage Vuv between U and V applied to the synchronous motor 2, but is not limited to this, and the voltage detector 4 could detect a line voltage applied to the synchronous motor 2.

Fig. 2 is a configuration diagram showing a configuration of the calculation part 5 in the first embodiment of the invention. As shown in Fig. 2, in the calculation part 5, the line voltage Vuv inputted from the voltage detector 4 is first inputted to a filter 10 and unnecessary noise obviously larger than the number of rotations of the synchronous motor 2 is eliminated and the line voltage Vuv becomes an output value Vuv-f. The output value Vuv-f is inputted to a speed calculator 30 as an output value Vuv-of after an influence of an offset voltage of the voltage detector 4 is further eliminated by an offset compensator 20. Then, in the speed calculator 30, a rotational angle frequency $\omega$ is calculated from Vuv-of and a calculation result is outputted to a wheel diameter calculator 40 as Vvf. In the wheel diameter calculator 40, a wheel diameter D is calculated by this Vvf and speed information V detected by the speed detector 8.

Next, an operation of the wheel diameter measuring apparatus constructed as mentioned above will be described.

First, during coasting of an electric vehicle in which the electric power converter 1 stops, a line voltage Vuv between U and V generated by production of a magnetic field by a permanent magnet attached to a rotor of the synchronous motor 2 is detected by the voltage detector 4. For the electric vehicle, torque is generated in operation of the electric power converter 1, so that minute idling and sliding may occur in a drive wheel and the electric power converter 1 desirably be stopped in order to measure a wheel diameter with high accuracy.

The line voltage Vuv between U and V detected by the voltage detector 4 is inputted to the filter 10 and unnecessary noise is eliminated. Here, the filter 10 can be constructed of a first-order lag function as shown in Fig. 2. In this case, a time constant T is set so that a frequency 10 times or more the maximum number of rotations of the synchronous motor 2 can be eliminated. For example, when the maximum number of rotations of the synchronous motor 2 is 300 Hz, unnecessary noise can be eliminated when the time constant T of the filter 10 is set as shown in Formula (1).

[Mathematical formula 1]

$$T = \frac{1}{2 \cdot \pi \cdot 300 \times 10} \quad \cdots (1)$$

Fig. 3 is a configuration diagram showing a configuration of the offset compensator 20 in the first embodiment of the invention. As shown in Fig. 3, the offset compensator 20 is made of a calculator 21, a stop deciding device 22 and a stop time measuring device 23, and makes a correction so that an output voltage becomes zero when an input voltage is zero. When speed information V and an output value Vuv-f of the filter 10 are inputted and the synchronous motor does not rotate, an average offset amount ofav of the voltage detector 4 is computed and its average offset amount ofav is subtracted from Vuv-f and thereby, an influence of the offset amount can be eliminated. Consequently, an influence of an offset voltage of the voltage detector 4 can be eliminated and an accurate speed can be calculated.

Fig. 4 is an operation diagram showing an operation of the offset compensator 20 in the first embodiment of the invention. The operation of the offset compensator 20 will hereinafter be described using Figs. 3 and 4.

First, in a state 1 before making offset compensation, a voltage value Vuv-f inputted to the offset compensator 20 becomes imbalanced up and down by an influence of an offset of the voltage detector 4 as shown in Fig. 4. In this state, a switching device 24a of Fig. 3 has a switch in the side of 0 (zero), and both outputs of an integrator 25 and a divider 26 become zero. When speed information V is not zero, the stop deciding device 22 sets an output value V22 at 0 and outputs the output value V22 to the switching devices 24a, 24b and the stop time measuring device 23. In addition, in the state 1, a switch of the switching device 24b is in the output side of the divider 26.

Next, the electric power converter 1 stops and the speed information V decreases gradually and in the case of becoming a state 2 in which the speed information V becomes zero, the speed information V=0 is inputted to the stop deciding device 22 and the output value V22=1 is outputted. Then, in the switching device 24a to which this output value V22 is inputted, the switch is switched from the 0 (zero) side to the side to which Vuv-f is inputted and on the other hand, the switch is switched to the 0 (zero) side in the switching device 24b.

The stop time measuring device 23 measures time for which the synchronous motor stops by inputting V22=1. As one example of means for measuring the stop time, an input value to the stop time measuring device 23 is 1, so that an output becomes 1 when integration is performed for one second by simply performing integration by an integrator. That is, when V22=1 is inputted, an output of integration matches with integration time (stop time of the synchronous motor) and the stop time can be measured.

On the other hand, Vuv-f is inputted through the switching device 24ato the integrator 25, to which an offset amount of the voltage detector 4 is inputted integrates its offset amount as shown in Fig. 4. An output value V25 of this integrator 25 is inputted to the divider 26 and V25 is divided by an output value V23 of the stop time measuring device 23 inputted likewise and thereby, an average offset amount ofav within the stop time can be computed.

Further, when the synchronous motor 2 rotates or the electric vehicle accelerates and the speed information V does not become zero, the output value V22 of the stop deciding device 22 changes from 1 to 0 and the state proceeds to a state 3 shown in Fig. 4. In the case of proceeding to the state 3, as shown in Fig. 4, the switch returns to the 0 side in the switching device 24a and an input of the integrator 25 becomes zero and thereby, the output value V25 of the integrator 25 continues to hold the value before the input becomes zero.

Also, the output value V23 of the stop time measuring device 23 similarly continues to hold the value of the measured stop time. Consequently, when the electric vehicle does not stop, the average offset amount ofav becomes a constant value and in the switching device 24b, the switch returns from the 0 (zero) side to the side to which an output ofav of the divider 26 is inputted. Then, the average offset amount ofav is inputted to the switching device 24b and the average offset amount ofav is subtracted from a voltage value Vuv-f by a subtracter 27. Therefore, as shown in Fig. 4, in an output voltage value Vuv-of of the offset compensator 20, an influence of an offset amount of the voltage detector 4 can be eliminated and up and down imbalance in plus and minus is eliminated and thereby, a speed can be calculated accurately and a wheel diameter can be measured with high accuracy.

Then, this Vuv-of is inputted to the speed calculator 30 and a failure detector 50. Fig. 5 is a configuration diagram showing a configuration of the speed calculator 30 in the first embodiment of the invention. As shown in Fig. 5, Vuv-of inputted to the speed calculator 30 is first differentiated two times by a two-time differentiator 31 and is divided by the original Vuv-of by a divider 32. Consequently, a speed [rad] of Vuv-of can be computed.

The principle will hereinafter be described using a formula.
The output value Vuv-of of the offset compensator 20 can be expressed as shown in Formula (2) when an amplitude is set at A and a rotational angle frequency of an AC voltage is set at ω [rad]. In addition, in Formula (2), it is considered that an offset amount of the voltage detector 4 can be eliminated by the offset compensator 20 and the offset amount is set at zero.

[Mathematical formula 2]

$$Vuv-of = A\sin(\omega \cdot t) \quad \cdots (2)$$

(Vuv-of)’ in which Vuv-of expressed by Formula (2) is differentiated one time can be expressed as shown in Formula (3).

[Mathematical formula 3]

$$(Vuv-of)' = A \cdot \omega \cdot \cos(\omega \cdot t) \quad \cdots (3)$$

Then, (Vuv-of) " in which (Vuv-of)’ expressed by Formula (3) is further differentiated one time, that is, an output value of the two-time differentiator 31 can be expressed as shown in Formula (4).

[Mathematical formula 4]

$$(Vuv-of)'' = -A \cdot \omega^2 \cdot \sin(\omega \cdot t) \quad \cdots (4)$$

In the divider 32, use of Formula (2) and Formula (4) shows Formula (5) and a square value of the rotational angle frequency ω of the AC voltage can be computed.

[Mathematical formula 5]

$$\frac{\left(Vuv-of\right)''}{Vuv-of}=\frac{-A\cdot\omega^{2}\cdot\sin(\omega\cdot t)}{A\sin(\omega\cdot t)}=-\omega^{2}\quad\cdots(5)$$

An output value of this divider 32 is inputted to a multiplier 33 and is multiplied by -1 and thereby, the value becomes a positive value and is inputted to a square root device 34. Then, the rotational angle frequency ω of the AC voltage is computed easily by the square root device 34.

Here, the voltage value Vuv-of inputted to the speed calculator 30 is differentiated two times by the two-time differentiator 31, but it is an AC voltage, so that zero is present periodically and when the zero is differentiated, the value may become a large value infinitely or in a plus or minus direction. In order to eliminate that, ω computed by the square root device 34 is inputted to a filter 35 and a component of rotational angle frequency ω of the stable AC voltage can be obtained and ω is outputted as Vvf.

In addition, when a time constant of the filter 35 is set at T2, T2 could be set at, for example, the minimum number or more of rotations measured. That is, when the number of rotations of 1 Hz or more wants to be measured, the number of rotations of 1 Hz or more can be measured stably by setting a value of Formula (6) as the time constant T2.

[Mathematical formula 6]

$$T2=\frac{1}{2\cdot\pi\cdot 1}\quad\cdots(6)$$

As described above, in the speed calculator 30, the rotational angle frequency ω of the AC voltage can be calculated easily from the output value Vuv-of of the offset compensator 20, so that the number of rotations of the synchronous motor 2 is found easily. An output value Vvf of this speed calculator 30 is next inputted to the wheel diameter calculator 40.

Fig. 6 is a configuration diagram showing a configuration of the wheel diameter calculator 40 in the first embodiment of the invention. As shown in Fig. 6, in the wheel diameter calculator 40, a wheel diameter D of the electric vehicle can be calculated from speed information V and the output value Vvf of the speed calculator 30.

Now, when a unit of the speed information V shall be km/h, the following relation between the speed information V and Vvf [rad] indicating the number of rotations of the synchronous motor 2 holds generally and the wheel diameter D [m] can be computed by the following Formula (8).

[Mathematical formula 7]

$$V=\frac{\text{WHEEL DIAMETER }D}{\text{GEAR RATIO }GR}\times\frac{3.6}{\text{POLAR LOGARITHM }Pm}\times Vvf\quad\cdots(7)$$

[Mathematical formula 8]

$$\text{WHEEL DIAMETER } D = \frac{\text{POLAR LOGARITHM } Pm \times \text{ GEAR RATIO } GR}{3.6} \times \frac{\text{SPEED INFORMATION } V}{Vvf} \cdots (8)$$

In addition, the polar logarithm Pm is a constant of the synchronous motor 2 and the gear ratio GR indicates a ratio of a gear to the wheel 7b connected to the synchronous motor 2 through an axle and a gear. This gear ratio varies depending on setting of performance and a kind of the electric vehicle and the polar logarithm Pm also varies depending on performance and a kind of the synchronous motor 2, so that a coefficient K is defined as shown in Formula (9). Consequently, Formula (8) can be expressed as shown in Formula (10).

[Mathematical formula 9]

$$\text{COEFFICIENT } K = \frac{\text{POLAR LOGARITHM } Pm \times \text{ GEAR RATIO } GR}{3.6} \cdots (9)$$

[Mathematical formula 10]

$$\text{WHEEL DIAMETER } D = \text{COEFFICIENT } K \times \frac{\text{SPEED INFORMATION } V}{Vvf} \cdots (10)$$

Here, the wheel diameter calculator 40 implements Formula (10) and as shown in Fig. 6, the inputted speed information V is divided by Vvf by a divider 41 and is inputted to a multiplier 42 and is multiplied by the coefficient K previously prepared and the wheel diameter D can be calculated.

On the other hand, the failure detector 50 to which the speed information V, the average offset amount ofav and the output value Vuv-of of the offset compensator 20 are inputted will be described in Fig. 2. This failure detector 50 is means for deciding that it is a failure of the voltage detector 4 when Vuv-of detected by the voltage detector 4 and offset-compensated, is smaller than the average offset amount ofav in the case where the synchronous motor 2 rotates and the speed information V is larger than a predetermined value.

Fig. 7 is a configuration diagram showing a configuration of the failure detector 50 in the first embodiment of the invention, and Fig. 8 is an operation diagram showing an operation of the failure detector 50 in the first embodiment of the invention. An operation of the failure detector 50 will hereinafter be described using Figs. 7 and 8.

As shown in Fig. 7, after Vuv-of inputted to the failure detector 50 is first inputted to an absolute value device 51a, Vuv-of is inputted to a filter 52. The filter 52 has a function of converting a value rectified by the absolute value device 51a into a DC voltage, so that a time constant T3 may be a sufficiently late value and could be set as shown by, for example, a value of Formula (11).

[Mathematical formula 11]

$$T3 = \frac{1}{2 \cdot \pi \cdot 0.1} \quad \cdots (11)$$

An output value V52 of this filter 52 becomes a value of a DC voltage as shown in Fig. 8. That is, here, an effective value of an AC voltage is obtained. When the synchronous motor 2 rotates, a magnetic field is produced by a permanent magnet attached to a rotor and an AC voltage is generated and this AC voltage is detected by the voltage detector 4, so that the AC voltage can be detected when the synchronous motor 2 rotates.
Therefore, it can be decided that it is in an abnormal state in which, for example, the voltage detector 4 fails when an effective value of an AC voltage value, in other words, the output value V52 of the filter 52 is zero or a small value in the case where the speed information V is larger than a predetermined speed.
As a result of that, the output value V52 of the filter 52 and a value in which an absolute value of the average offset amount ofav is taken by an absolute value device 51b are inputted to a less-than comparator 53 and the less-than comparator 53 compares these values and when the output value V52 of the filter 52 is smaller than an output value of the absolute value device 51b, an output value V53=1 is outputted to a logical product (AND) device 55 and when the output value V52 is larger than or equal to the output value in reverse, the output value V53=0 is outputted to the logical product (AND) device 55.
On the other hand, the speed information V inputted to the failure detector 50 is inputted to a greater-than comparator 54 and is compared with a predetermined speed V0. The greater-than comparator 54 outputs an output value V54=1 to the logical product (AND) device 55 when the speed information V is larger than the predetermined speed V0, and outputs the output value V54=0 to the logical product (AND) device 55 when the speed information V is smaller than or equal to the predetermined speed V0 in reverse. In addition, the predetermined speed V0 compared by the greater-than comparator 54 could be set at a value about 1/10 the maximum speed. For example, for an electric vehicle with the maximum speed of 300 km/h, the speed V0 is set at 30 km/h and when the speed information V exceeds 30 km/h, failure detection is performed.
The logical product (AND) device 55 to which V53 and V54 are respectively inputted from the less-than comparator 53 and the greater-than comparator 54 outputs Vuv-er which is an abnormal detection signal when V53=1 and V54=1 are satisfied. It may be constructed so that this abnormal detection signal Vuv-er is transmitted to, for example, a monitoring device of a cab and the monitoring device is notified of abnormality, or the abnormal detection signal Vuv-er is inputted to a controller of the electric power converter 1 and an electric vehicle is stopped and a state of the synchronous motor 2 or the voltage detector 4 can be checked.
As described above, in an electric vehicle of speed sensorless vector control driven by a synchronous motor, the wheel diameter measuring apparatus according to the first embodiment can accurately measure a wheel diameter of the electric vehicle by detecting an AC voltage generated by a magnetic field of the synchronous motor. Also, there is an effect of obtaining the wheel diameter measuring apparatus of the electric vehicle with higher reliability by comprising a failure detector of a voltage detector.
Further, a wheel diameter D obtained by the wheel diameter measuring apparatus according to the first embodiment is supplied to a wheel diameter correction and thereby the correction according to a difference between the wheel diameters of each wheel can be made, so that the electric vehicle can be controlled accurately like the case of applying a conventional induction motor. Also, a decision on replacement of a wheel may be made by measuring the extent of wear of the wheel using the wheel diameter D obtained by the wheel diameter measuring apparatus of the present application. Also, it may be used as management information about the electric vehicle by transmitting a measured value to a driving control system etc. of a station etc. and a communication network extended inside the electric vehicle of an integrated system, a vehicular train controller or a monitoring device of a cab, etc.

Second embodiment

A wheel diameter measuring apparatus 3 in a second embodiment is made of a voltage detector 4 for detecting an AC voltage of a synchronous motor 2 and an electric power converter 1, and a calculation part 5 (5a in the second embodiment) for calculating a wheel diameter by the detected AC voltage like the first embodiment, and differs from the first embodiment in that a speed calculator performs two-time differentiation two times (that is, four-time differentiation) in the calculation part 5a. Consequently, an influence of an offset of the voltage detector can be eliminated, so that it is configured so as not to require an offset compensator.
In addition, the explanation is omitted by assigning the same numerals to the same portions as those of the first embodiment.

Fig. 9 is a configuration diagram showing a configuration of the calculation part 5a in the second embodiment of the invention. In the calculation part 5a of the second embodiment, a line voltage Vuv inputted from the voltage detector 4 is first inputted to a filter 10 and unnecessary noise obviously larger than the number of rotations of the synchronous motor 2 is eliminated and the line voltage Vuv becomes an output value Vuv-f. Then, the output value Vuv-f is inputted to a speed calculator 60.

Fig. 10 is a configuration diagram showing a configuration of the speed calculator 60 in the second embodiment of the invention. An operation of this speed calculator 60 will hereinafter be described using Fig. 10.

First, Vuv-f inputted from the filter 10 can be expressed as shown in Formula (12) when an amplitude is set at A and a rotational angle frequency of an AC voltage is set at ω [rad] and an offset amount is set at b.

[Mathematical formula 12]

$$\text{Vuv-f} = A\sin(\omega \cdot t) + b \quad \cdots(12)$$

Here, the inventor et al. found that the offset amount b was eliminated as shown in the following Formula (13) in (Vuv-f)' in which Vuv-f expressed by Formula (12) is differentiated one time.

[Mathematical formula 13]

$$(\text{Vuv-f})' = A \cdot \omega \cdot \cos(\omega \cdot t) \quad \cdots(13)$$

(Vuv-f)" in which (Vuv-f)' expressed by Formula (13) is further differentiated one time can be expressed as shown in Formula (14). That is, Formula (14) differentiates Vuv-f two times, and corresponds to an output value of a two-time differentiator 61a shown in Fig. 10. Then, in this value, the offset amount is eliminated.

[Mathematical formula 14]

$$(\text{Vuv-f})'' = -A \cdot \omega^2 \cdot \sin(\omega \cdot t) \quad \cdots(14)$$

The output value (Vuv-f)" of this two-time differentiator 61a is inputted to a two-time differentiator 61b and a divider 62, and is further differentiated two times in the two-time differentiator 61b, and becomes (Vuv-f)"" expressed by Formula (16).

[Mathematical formula 15]

$$(\text{Vuv-f})''' = -A \cdot \omega^3 \cdot \cos(\omega \cdot t) \quad \cdots(15)$$

[Mathematical formula 16]

$$(Vuv\text{-}f)'''' = A \cdot \omega^4 \cdot \sin(\omega \cdot t) \quad \cdots (16)$$

In the divider 62 to which the output value (Vuv-f)" of the two-time differentiator 61a and the output value (Vuv-f)"" of the two-time differentiator 61b are inputted, a square value of the rotational angle frequency ω of an AC voltage can be calculated by dividing these output values as shown in Formula (17).

[Mathematical formula 17]

$$\frac{(Vuv\text{-}f)''''}{(Vuv\text{-}f)''} = \frac{A \cdot \omega^4 \cdot \sin(\omega \cdot t)}{-A \cdot \omega^2 \cdot \sin(\omega \cdot t)} = -\omega^2 \quad \cdots (17)$$

Afterward, like the first embodiment, by being inputted to a multiplier 63 and being multiplied by -1, the value becomes a positive value and is inputted to a square root device 64. Then, the rotational angle frequency ω of the AC voltage can easily be computed by the square root device 64.

Next, a failure detector 70 to which speed information V and the output value Vuv-f of the filter 10 are inputted will be described in Fig. 9.

Fig. 11 is a configuration diagram showing a configuration of the failure detector 70 in the second embodiment of the invention. An operation of this failure detector 70 will hereinafter be described using Fig. 11.

The failure detector 70 differs from the failure detector 50 of the first embodiment in that a value compared with an effective value of a voltage detection value Vuv-f by a less-than comparator 71 is only zero as shown in Fig. 11.

In Fig. 11, after the output value Vuv-f of the filter 10 inputted to the failure detector 70 is first inputted to an absolute value device 51c, Vuv-f is inputted to a filter 52. In the filter 52, like the first embodiment, a value rectified by the absolute value device 51c is converted into a DC voltage, so that a time constant T3 may be a sufficiently late value and could be set as shown by, for example, a value of Formula (11).

An output value V52 of this filter 52 is an effective value of an AC voltage and is inputted to the less-than comparator 71. In the less-than comparator 71, when the output value V52 of the filter 52 is smaller than zero, an output value V71=1 is outputted to a logical product (AND) device 55 and when the output value V52 is larger than or equal to zero in reverse, the output value V71=0 is outputted to the logical product (AND) device 55. Therefore, here, abnormal detection is performed when the effective value of the AC voltage becomes zero, but a comparison value of the less-than comparator 71 is not limited to this, and may be set at a predetermined value sufficiently smaller than a voltage generated by a magnetic field by a permanent magnet attached to a rotor at a predetermined speed V0 inputted to a greater-than comparator 54.

Like the first embodiment, when V71=1 and V54=1 are satisfied, the logical product (AND) device 55 to which V71 and V54 are respectively inputted from the less-than comparator 71 and the greater-than comparator 54 outputs Vuv-er which is an abnormal detection signal, and abnormality is detected.

As described above, in an electric vehicle of speed sensorless vector control driven by a synchronous motor, the wheel diameter measuring apparatus according to the second embodiment can eliminate an influence of an offset amount of a voltage detector without using an offset compensator by having a speed calculator for performing calculation of two-time differentiation, and the wheel diameter measuring apparatus of the electric vehicle with higher reliability and a smaller number of components than the first embodiment can be obtained.

Third embodiment

Fig. 12 is a configuration diagram showing a configuration of a wheel diameter measuring apparatus in a third embodiment of the invention. The third embodiment differs from the first embodiment in that a wheel diameter measuring apparatus 3 comprises two voltage detectors 4a, 4b for detecting an AC voltage of a synchronous motor 2 and this electric power converter 1 and is made of a calculation part 5b for calculating a wheel diameter by the AC voltages detected from the two voltage detectors 4a, 4b.
In addition, the explanation is omitted by assigning the same numerals to the same portions as those of the first embodiment.

As shown in Fig. 12, first, during coasting of an electric vehicle in which the electric power converter 1 stops, line voltages Vuv, Vvw between U and V and between V and W generated by production of a magnetic field by a permanent magnet attached to a rotor of the synchronous motor 2 are detected by the voltage detectors 4a, 4b like the first embodiment. Then, the detected line voltages Vuv, Vvw are inputted to the calculation part 5b.

Fig. 13 is a configuration diagram showing a configuration of the calculation part 5b in the third embodiment of the invention. As shown in Fig. 13, after the inputted line voltages Vuv, Vvw are respectively inputted to filters 10a, 10b and unnecessary noise is eliminated, the line voltages are respectively outputted to offset compensators 20a, 20b as output values Vuv-f, Vvw-f. In the offset compensators 20a, 20b, values Vuv-of, Vvw-of in which offset amounts of the voltage detectors 4a, 4b are eliminated are respectively calculated, and are outputted to a speed calculator 80 like the first embodiment.

Fig. 14 is a configuration diagram showing a configuration of the speed calculator 80 in the third embodiment of the invention. An operation of this speed calculator 80 will hereinafter be described using Fig. 14.
First, Vuv-of, Vvw-of inputted to the speed calculator 80 are respectively converted into Vα, Vβ expressed by Formula (18) by an αβ converter 81.

[Mathematical formula 18]

$$\begin{bmatrix} V\alpha \\ V\beta \end{bmatrix} = \sqrt{\frac{2}{3}} \begin{bmatrix} 1 & \frac{1}{2} \\ 0 & \frac{\sqrt{3}}{2} \end{bmatrix} \begin{bmatrix} Vuv-of \\ Vvw-of \end{bmatrix} \quad \cdots (18)$$

Here, when a magnetic flux of the permanent magnet attached to the rotor of the synchronous motor 2 is set at Φa and the number of rotations of the synchronous motor 2 is set at Vvf, Vα, Vβ of Formula (18) can be expressed as shown in the following Formula (19).

[Mathematical formula 19]

$$Vvf \times \phi a = \sqrt{(V\alpha)^2 + (V\beta)^2} \quad \cdots (19)$$

Since the magnetic flux Φa of the permanent magnet attached to the rotor of the synchronous motor 2 can be grasped previously, Vvf indicating the number of rotations of the synchronous motor 2 can be calculated as shown in Formula (20) using Formula (19) .

[Mathematical formula 20]

$$Vvf = \frac{\sqrt{(V\alpha)^2 + (V\beta)^2}}{\phi a} \quad \cdots (20)$$

As shown in Fig. 14, after Vα, Vβ outputted from the αβ converter 81 are respectively inputted to multipliers 82a, 82b and are squared, Vα, Vβ are inputted to an adder 83 and a square root device 84 and calculation of the right side of Formula (19) is performed. This result is inputted to a divider 85 and is divided by the magnetic flux Φa of the permanent magnet previously prepared, and Formula (20) is calculated. As a result of this, Vvf indicating the number of rotations of the synchronous motor 2 can be obtained as an output of the divider 85.

After Vvf calculated by the speed calculator 80 as described above is inputted to a wheel diameter calculator 40 as shown in Fig. 13, a wheel diameter D of the electric vehicle can be obtained like the first embodiment.

On the other hand, a failure detector 90 to which the output values Vuv-of, Vvw-of, average offset amounts ofav1, ofav2 of the two offset compensators 20a, 20b and speed information V are inputted will be described in Fig. 13. This failure detector 90 detects that the two voltage detectors 4a, 4b are abnormal, but a possibility that the two voltage detectors 4a, 4b fail simultaneously is low, so that the failure detector 90 detects both of abnormal detections Vuv-er and Vvw-er and detects that either the voltage detectors 4a, 4b or the synchronous motor 2 is abnormal.

Fig. 15 is a configuration diagram showing a configuration of the failure detector 90 in the third embodiment of the invention. An operation of this failure detector 90 will hereinafter be described using Fig. 15. After Vuv-of inputted to the failure detector 90 is first inputted to an absolute value device 51a, Vuv-of is inputted to a filter 52a. In the filter 52a, like the first embodiment, a value rectified by the absolute value device 51a is converted into a DC voltage, so that a time constant T3 may be a sufficiently late value and could be set as shown by, for example, a value of Formula (11).

An output value of this filter 52a and a value in which an absolute value of an average offset amount ofav is taken by an absolute value device 51b are inputted to a less-than comparator 53a. The less-than comparator 53a compares these values and when the output value of the filter 52a is smaller than an output value of the absolute value device 51b, an output value V53a=1 is outputted to a logical product (AND) device 55a and when the output value is larger than or equal to the output value in reverse, the output value V53a=O is outputted to the logical product (AND) device 55a.

Similarly, Vvw-of between V and W is calculated and an output value V53b=1 or V53b=0 is outputted from a less-than comparator 53b to a logical product (AND) device 55b. In addition, like the second embodiment, a value compared by the less-than comparators 53a, 53b may be zero rather than the value in which the absolute value of the average offset amount ofav is taken.

On the other hand, the speed information V inputted to the failure detector 90 is inputted to a greater-than comparator 54 and is compared with a predetermined speed V0. The greater-than comparator 54 outputs an output value V54=1 to the logical product (AND) devices 55a, 55b when the speed information V is larger than the predetermined speed V0, and outputs the output value V54=0 to the logical product (AND) devices 55a, 55b when the speed information V is smaller than or equal to the predetermined speed V0 in reverse. In addition, like the first embodiment, the predetermined speed V0 compared by the greater-than comparator 54 could be set at, for example, a value about 1/10 the maximum speed and for an electric vehicle with the maximum speed of 300 km/h, the speed V0 is set at 30 km/h and when the speed information V exceeds 30 km/h, failure detection is performed.

Like the case of the first embodiment, the logical product (AND) devices 55a, 55b respectively output Vuv-er which is an abnormal detection signal when V53a=1 and V54=1 are satisfied to a logical product (AND) device 91, and output Vvw-er when V53b=1 and V54=1 are satisfied to the logical product (AND) device 91. In addition, it may be constructed so that the abnormal detection signals Vuv-er, Vvw-er are transmitted to, for example, a monitoring device of a cab other than the logical product (AND) device 91 and the monitoring device is notified of abnormality, or the abnormal detection signals Vuv-er, Vvw-er are inputted to a controller of the electric power converter 1 and an electric vehicle is stopped and a state of the synchronous motor 2 or the voltage detector 4 can be checked.

Also, when both of Vuv-er and Vvw-er are inputted, the logical product (AND) device 91 detects that either the voltage detectors 4a, 4b or the synchronous motor 2 is abnormal, and outputs V-er. That is, by demagnetizing or detaching the permanent magnet attached to the rotor of the synchronous motor 2, a voltage is not generated even at high speed and this state is grasped from a situation in which the two voltage detectors are abnormal and it is detected as abnormality of the synchronous motor 2.

As described above, in an electric vehicle of speed sensorless vector control driven by a synchronous motor, the wheel diameter measuring apparatus according to the third embodiment can calculate a wheel diameter of the electric vehicle by only simple calculation without performing complicated differential calculation processing in a calculation part by comprising two voltage detectors for detecting AC voltages of two places generated in the synchronous motor. Therefore, as compared with the first embodiment and the second embodiment described above, for example, the number of components of a circuit constructing the apparatus can be reduced greatly, so that the wheel diameter measuring apparatus with high reliability and a simple apparatus configuration can be obtained.

Further, failure detectors are had with respect to the respective voltage detectors, so that a failure can be detected individually and also abnormality of the synchronous motor itself can be detected by information from these two failure detectors and when abnormality occurs in the synchronous motor and the two voltage detectors, the abnormality can be respectively handled speedily and there is an effect capable of obtaining the wheel diameter measuring apparatus of the electric vehicle with higher reliability.

In addition, the voltage detectors 4a, 4b shown in Fig. 12 are connected to a U phase connecting terminal lu and a V phase connecting terminal 1v and the V phase connecting terminal 1v and a W phase connecting terminal 1w of the AC side of the electric power converter, and detect a line voltage Vuv between U and V and a line voltage Vvw between V and W applied to the synchronous motor 2, but are not limited to this, and the voltage detector 4 could detect different two line voltages applied to the synchronous motor 2. Also, it goes without saying that it may be attached to a connecting terminal of the AC side of the synchronous motor 2.

Therefore, for example, as shown in Fig. 16, when the voltage detector 4a is disposed in a terminal of the side of the electric power converter 1 and the voltage detector 4c is disposed in a terminal of the side of the synchronous motor 2, it becomes unnecessary to attach two voltage detectors to one phase connecting terminal as described in the voltage detectors shown in Fig. 12 and there is an effect capable of improving efficiency of attachment work.

Fourth embodiment

Fig. 17 is a configuration diagram showing a configuration of a wheel diameter measuring apparatus in a fourth embodiment of the invention. In addition to the configuration of the first embodiment, in the fourth embodiment, a wheel diameter correcting part 100 is added and using a wheel diameter D calculated by a calculation part 5 of a wheel diameter measuring apparatus 3b, a torque command for controlling an electric power converter 1 can be corrected according to a wheel diameter difference.
In addition, the explanation is omitted by assigning the same numerals to the same portions as those of the first embodiment.

As shown in Fig. 17, in the wheel diameter measuring apparatus 3b of an electric vehicle according to the fourth embodiment, the wheel diameter D calculated by the calculation part 5 is inputted to the wheel diameter correcting part 100 and a torque command TRD in consideration of a wheel diameter difference is generated and is inputted to a controller 110 for controlling the electric power converter 1.
Fig. 18 is a configuration diagram showing a configuration of the wheel diameter correcting part 100 in the fourth embodiment of the invention. An operation of this wheel diameter correcting part 100 will hereinafter be described using Fig. 18.

The wheel diameter correcting part 100 is constructed of a divider 101 for dividing a wheel diameter D by a reference wheel diameter DIAST and calculating a wheel diameter correction gain DIAG, a limiter 102 for setting the wheel diameter correction gain DIAG which is an output of the divider 101 so as not to become a minimum wheel diameter correction gain DIAGMI or less and a maximum wheel diameter correction gain DIAGMX or more, and a multiplier 103 for multiplying a wheel diameter correction gain DIAGR which is an output of the limiter 102 by a torque command TR as shown in Fig. 18.

In the divider 101, calculation of the following Formula (21) is performed.

[Mathematical formula 21]

$$\text{WHEEL DIAMETER GAIN } DIAG = \frac{\text{WHEEL DIAMETER } D}{\text{REFERENCE WHEEL DIAMETER } DIAST} \quad \cdots(21)$$

In addition, the reference wheel diameter DIAST is normally set at 0.82 [m]. Also, the inventor et al. found that the wheel diameter D of an electric vehicle was within a range of 0.73m≤D≤0.90m even on operating condition of any electric vehicle. Therefore, the wheel diameter gain DIAG which is an output calculated by the divider 101 is inputted to the limiter 102 and the following processing is performed.

In the case of minimum wheel diameter correction gain DIAGMI≤wheel diameter gain DIAG≤maximum wheel diameter correction gain DIAGMX, an output value DIAGR of the limiter 102 is set at the wheel diameter gain DIAG.
In the case of minimum wheel diameter correction gain DIAGMI>wheel diameter gain DIAG, the output value DIAGR of the limiter 102 is set at the minimum wheel diameter correction gain DIAGMI.
In the case of wheel diameter gain DIAG>maximum wheel diameter correction gain DIAGMX, the output value DIAGR of the limiter 102 is set at the maximum wheel diameter correction gain DIAGMX.

Here, the maximum wheel diameter correction gain DIAGMX could be set at, for example, a value of 1 or more and 1.1 (=0.90/0.82) or less since the wheel diameter D is within the range of 0.73m≤wheel diameter D≤0. 90m and similarly, the minimum wheel diameter correction gain DIAGMI could be set at, for example, a value of 0.9 (=0.73/0.82) or more and 1 or less since the wheel diameter D is within the range of 0.73m≤wheel diameter D≤0.90m.
By this limiter 102, correction is not made by a gain incapable of assumption and reliability of torque command control can be enhanced.

The output value DIAGR of the limiter 102 and the torque command TR given from a cab etc. are inputted to the multiplier 103 and are multiplication is performed. As a result of that, the torque command TRD in consideration of the wheel diameter difference is generated and is outputted to the controller 110. That is, by inputting the torque command TRD according to an individual wheel diameter to the controller 110, the controller 110 can control the electric power converter 1 by, for example, publicly known vector control with wheel diameter correction.

As described above, in an electric vehicle of speed sensorless vector control driven by a synchronous motor, the wheel diameter measuring apparatus of the electric vehicle according to the fourth embodiment can correct a torque command for controlling an electric power converter according to a wheel diameter difference by inputting a wheel diameter D calculated by a calculation part to a wheel diameter correcting part since the wheel diameter correcting part is added in addition to the configuration of the first embodiment. That is, wheel diameter correction of the electric vehicle of speed sensorless vector control driven by the synchronous motor can be made, so that stable acceleration and deceleration control of the electric vehicle can be implemented and travel of the electric vehicle is made comfortable.

In addition, in the explanation of the fourth embodiment described above, the wheel diameter measuring apparatus 3 is based on the first embodiment, but is not limited to this, and it goes without saying that a similar effect can be obtained in the wheel diameter measuring apparatus of the second embodiment and the third embodiment.

## Claims

1. A wheel diameter (3, 3a, 3b) measuring apparatus of an electric vehicle comprising a synchronous motor (2) driven by an electric power converter (1) for converting a DC voltage into an AC voltage, **characterized by** comprising:

   a voltage detector (4, 4a, 4b) for detecting an AC voltage generated by a magnetic field of the synchronous motor (2) during coasting of the electric vehicle in which the electric power converter (1) stops, and
   a calculation part (5, 5a, 5b) for calculating a wheel diameter (7a, 7b) of a wheel driven by the synchronous motor (2) from an AC voltage detected by the voltage detector (4, 4; 4b) and speed information about the electric vehicle.

2. A wheel diameter measuring apparatus of an electric vehicle as claimed in claim 1, **characterized in that** the calculation part comprises a speed detector (8) for detecting a speed of a non-driving wheel which is not driven directly by the synchronous motor (2), and a failure detector (50) for comparing a predetermined value with the detection value of the speed detector (8) and detecting a failure of the voltage detector (4, 4a, 4b).

3. A wheel diameter measuring apparatus of an electric vehicle as claimed in claim 1, **characterized in that** the calculation part (5, 5a, 5b) comprises a speed calculator (60, 80) for computing a rotational angle frequency and eliminates an offset voltage from an AC voltage detected by the voltage detector (4, 4a, 4b).

4. A wheel diameter measuring apparatus of an electric vehicle as claimed in claim 1, **characterized in that** the calculation part (5, 5a, 5b) comprises an offset compensator (20, 20a, 20b) for computing an average offset amount of the voltage detector (4, 4a, 4b) while the synchronous motor (2) does not rotate and eliminating the average offset amount from an AC voltage detected by the voltage detector (4, 4a, 4b).

5. A wheel diameter measuring apparatus of an electric vehicle as claimed in claim 1, **characterized in that** the calculation part (5, 5a, 5b) comprises a speed calculator (60, 80) for performing differential calculation processing of an AC voltage detected by the voltage detector (4, 4a, 4b) and eliminating an offset voltage of the voltage detector (4, 4a, 4b).

**6.** A wheel diameter measuring apparatus of an electric vehicle as claimed in claim 1, **characterized in that** the voltage detector (4, 4a, 4b) is made of a first voltage detector (4a) and a second voltage detector (4b) for detecting line voltages of different two places applied to the synchronous motor (2), and the calculation part (5, 5a, 5b) calculates a wheel diameter of a wheel (7a, 7b) driven by the synchronous motor (2) from AC voltages detected by the first voltage detector (4a) and the second voltage detector (4b) and speed information about the electric vehicle.

**7.** A wheel diameter measuring apparatus of an electric vehicle as claimed in claim 6, **characterized in that** the calculation part (5, 5a, 5b) comprises a failure detector (50, 70, 90) for comparing a predetermined value with detection values of the first voltage detector (4a) and the second voltage detector (4b) and detecting abnormalities of the first voltage detector (4a) and the second voltage detector (4b).

**8.** A wheel diameter measuring apparatus of an electric vehicle as claimed in claim 7, **characterized in that** the failure detector (50, 70, 90) comprises a first failure detector and a second failure detector for respectively comparing a predetermined value with detection values of the first voltage detector (4a) and the second voltage detector (4b), and the calculation part detects abnormality of the synchronous motor (2) or the first voltage detector (4a) or the second voltage detector (4b) based on outputs of the first failure detector and the second failure detector.

**9.** A wheel diameter measuring apparatus of an electric vehicle as claimed in any of claims 1-8, **characterized by** comprising a wheel diameter correcting part (100) for correcting a torque command value for controlling the electric power converter (1) according to a wheel diameter calculated by the calculation part (5, 5a, 5b).

**10.** A wheel diameter measuring apparatus of an electric vehicle as claimed in claim 9, **characterized in that** the wheel diameter correcting part (100) comprises a limiter for setting a wheel diameter correction gain in which a wheel diameter calculated by the calculation part (5, 5a, 5b) is divided by a reference wheel diameter within a predetermined range.

**11.** A wheel diameter measuring apparatus of an electric vehicle as claimed in claim 4, **characterized in that** the calculation part (5, 5a, 5b) comprises a speed calculator (50, 60, 80) which carries out calculation described in formula 1:

$$\frac{(Vuv-of)''}{Vuv-of} = \frac{-A\cdot\omega^2\cdot\sin(\omega\cdot t)}{A\sin(\omega\cdot t)} = -\omega^2 \ldots.(1)$$

where
Vuv-of : value inputted into the speed calculator
A : amplitude of AC voltage
ω : rotational angle frequency of AC voltage
t : time.

**12.** A wheel diameter measuring apparatus of an electric vehicle as claimed in claim 5, **characterized in that** the speed calculator (30, 60, 80) carries out calculation described in formula 2:

$$\frac{(Vuv-f)''''}{(Vuv-f)''} = \frac{A\cdot\omega^4\cdot\sin(\omega\cdot t)}{-A\cdot\omega^2\cdot\sin(\omega\cdot t)} = -\omega^2 \ldots.(2)$$

where
Vuv-f : value inputted into the speed calculator
A : amplitude of AC voltage
ω : rotational angle frequency of AC voltage

t : time.

**13.** A wheel diameter measuring apparatus of an electric vehicle as claimed in claim 1, **characterized in that** the wheel diameter calculated by the calculation part (5, 5a, 5b) is used as management information by transmitting the wheel diameter to a vehicular train controller or a driving control system.

**14.** A wheel diameter measuring apparatus of an electric vehicle as claimed in claim 1, **characterized in that** the calculation part (5, 5a, 5b) comprises:

a speed detector (30, 60, 80) for detecting a speed of a non-driving wheel which is not driven directly by the synchronous motor (2);
a offset compensator (20, 20a, 20b) for computing an average offset amount of the voltage detector (4, 4a, 4b) and outputting a value obtained by eliminating the average offset amount from the AC voltage detected by the voltage detector (4, 4a, 4b); and
a failure detector (50, 70, 90) for comparing a predetermined value with the detection value of the speed detector (30, 60, 80) and comparing the output value of the offset compensator with the average offset amount of the voltage detector (4, 4a, 4b) and detecting a failure of the voltage detector (4, 4a, 4b).

## Patentansprüche

**1.** Messvorrichtung für einen Raddurchmesser (3, 3a, 3b) eines Elektrofahrzeugs, einen Synchronmotor (2) umfassend, der durch einen Elektroenergiewandler (1) angetrieben ist, um eine Gleichspannung in eine Wechselspannung umzuwandeln, **dadurch gekennzeichnet, dass** sie umfasst:

eine Spannungserfassungsvorrichtung (4, 4a, 4b) zum Erfassen einer Wechselspannung, die durch ein Magnetfeld des Synchronmotors (2) während einer Leerlauffahrt des Elektrofahrzeugs erzeugt wird, bei der der Elektroenergiewandler (1) anhält, und
ein Berechnungsteil (5, 5a, 5b) zum Berechnen eines Raddurchmessers (7a, 7b) eines durch den Synchronmotor (2) angetriebenen Rads aus einer durch die Spannungserfassungsvorrichtung (4, 4a, 4b) erfassten Wechselspannung und Geschwindigkeitsinformation über das Elektrofahrzeug.

**2.** Raddurchmessermessvorrichtung eines Elektrofahrzeugs nach Anspruch 1, **dadurch gekennzeichnet, dass** das Berechnungsteil eine Geschwindigkeitserfassungsvorrichtung (8) zum Erfassen einer Geschwindigkeit eines nicht direkt durch den Synchronmotor (2) angetriebenen, nicht antreibenden Rads und eine Fehlererfassungsvorrichtung (50) zum Vergleichen eines vorbestimmten Werts mit dem Erfassungswert der Geschwindigkeitserfassungsvorrichtung (8) und zum Erfassen eines Fehlers der Spannungserfassungsvorrichtung (4, 4a, 4b) umfasst.

**3.** Raddurchmessermessvorrichtung eines Elektrofahrzeugs nach Anspruch 1, **dadurch gekennzeichnet, dass** das Berechnungsteil (5, 5a, 5b) eine Geschwindigkeitsberechnungsvorrichtung (60, 80) zum Berechnen einer Drehwinkelfrequenz umfasst und eine Offset-Spannung aus einer durch die Spannungserfassungsvorrichtung (4, 4a, 4b) erfassten Wechselspannung eliminiert.

**4.** Raddurchmessermessvorrichtung eines Elektrofahrzeugs nach Anspruch 1, **dadurch gekennzeichnet, dass** das Berechnungsteil (5, 5a, 5b) eine Offset-Ausgleichsvorrichtung (20, 20a, 20b) zum Berechnen eines durchschnittlichen Offset-Betrags der Spannungserfassungsvorrichtung (4, 4a, 4b) während der Synchronmotor (2) nicht dreht und zum Eliminieren des durchschnittlichen Offset-Betrags aus einer durch die Spannungserfassungsvorrichtung (4, 4a, 4b) erfassten Wechselspannung umfasst.

**5.** Raddurchmessermessvorrichtung eines Elektrofahrzeugs nach Anspruch 1, **dadurch gekennzeichnet, dass** das Berechnungsteil (5, 5a, 5b) eine Geschwindigkeitsberechnungsvorrichtung (60, 80) zum Durchführen einer Differenzberechnungsverarbeitung einer durch die Spannungserfassungsvorrichtung (4, 4a, 4b) erfassten Wechselspannung und zum Eliminieren einer Offset-Spannung der Spannungserfassungsvorrichtung (4, 4a, 4b) umfasst.

**6.** Raddurchmessermessvorrichtung eines Elektrofahrzeugs nach Anspruch 1, **dadurch gekennzeichnet, dass** die Spannungserfassungsvorrichtung (4, 4a, 4b) aus einer ersten Spannungserfassungsvorrichtung (4a) und einer zweiten Spannungserfassungsvorrichtung (4b) zum Erfassen von am Synchronmotor (2) an zwei verschiedenen Stellen anliegenden Leitungsspannungen besteht, und das Berechnungsteil (5, 5a, 5b) einen Raddurchmesser eines durch den Synchronmotor (2) angetriebenen Rads (7a, 7b) aus durch die erste Spannungserfassungsvorrichtung (4a) und die zweite Spannungserfassungsvorrichtung (4b) erfassten Wechselspannungen und Geschwindigkeitsinformation über das Elektrofahrzeug berechnet.

**7.** Raddurchmessermessvorrichtung eines Elektrofahrzeugs nach Anspruch 6, **dadurch gekennzeichnet, dass** das Berechnungsteil (5, 5a, 5b) eine Fehlererfassungsvorrichtung (50, 70, 90) zum Vergleichen eines vorbestimmten Werts mit Erfassungswerten der ersten Spannungserfassungsvorrichtung (4a) und der zweiten Spannungserfassungsvorrichtung (4b) und zum Erfassen von Unregelmäßigkeiten der ersten Spannungserfassungsvorrichtung (4a) und der zweiten Spannungserfassungsvorrichtung (4b) umfasst.

**8.** Raddurchmessermessvorrichtung eines Elektrofahrzeugs nach Anspruch 7, **dadurch gekennzeichnet, dass** die Fehlererfassungsvorrichtung (50, 70, 90) eine erste Fehlererfassungsvorrichtung und eine zweite Fehlererfassungsvorrichtung zum jeweiligen Vergleichen eines vorbestimmten Werts mit Erfassungswerten der ersten Spannungserfassungsvorrichtung (4a) und der zweiten Spannungserfassungsvorrichtung (4b) umfasst, und das Berechnungsteil eine Unregelmä-βigkeit des Synchronmotors (2) oder der ersten Spannungserfassungsvorrichtung (4a) oder der zweiten Spannungserfassungsvorrichtung (4b) auf Grundlage von Ausgängen der ersten Fehlererfassungsvorrichtung und der zweiten Fehlererfassungsvorrichtung ermittelt.

**9.** Raddurchmessermessvorrichtung eines Elektrofahrzeugs nach einem der Ansprüche 1 bis 8, **dadurch gekennzeichnet, dass** sie ein Raddurchmesserkorrekturteil (100) zum Korrigieren eines Drehmomentbefehlswerts umfasst, um den Elektroenergiewandler (1) entsprechend einem durch das Berechnungsteil (5, 5a, 5b) berechneten Raddurchmesser zu steuern.

**10.** Raddurchmessermessvorrichtung eines Elektrofahrzeugs nach Anspruch 9, **dadurch gekennzeichnet, dass** das Raddurchmesserkorrekturteil (100) eine Begrenzungsvorrichtung zum Ansetzen einer Raddurchmesserkorrekturverstärkung umfasst, in der ein durch das Berechnungsteil (5, 5a, 5b) berechneter Raddurchmesser durch einen Bezugsraddurchmesser innerhalb eines vorbestimmten Bereichs geteilt wird.

**11.** Raddurchmessermessvorrichtung eines Elektrofahrzeugs nach Anspruch 4, **dadurch gekennzeichnet, dass** das Berechnungsteil (5, 5a, 5b) eine Geschwindigkeitsberechnungsvorrichtung (50, 60, 80) umfasst, die die in Formel 1 beschriebene Berechnung ausführt:

$$\frac{(Vuv-of)''}{Vuv-of}=\frac{-A\cdot\omega^{2}\cdot\sin(\omega\cdot t)}{A\sin(\omega\cdot t)}=-\omega^{2}\ldots(1)$$

worin
Vuv-of: in die Geschwindigkeitsberechnungsvorrichtung eingegebener Wert
A: Wechselspannungsamplitude
ω: Wechselspannungsdrehwinkelfrequenz
t: Zeit ist.

**12.** Raddurchmessermessvorrichtung eines Elektrofahrzeugs nach Anspruch 5, **dadurch gekennzeichnet, dass** die Geschwindigkeitsberechnungsvorrichtung (30, 60, 80) die in Formel 2 beschriebene Berechnung ausführt:

$$\frac{(Vuv-f)''''}{(Vuv-f)''}=\frac{-A\cdot\omega^{4}\cdot\sin(\omega\cdot t)}{A\cdot\omega^{2}\cdot\sin(\omega\cdot t)}=-\omega^{2}\ldots(2)$$

worin
Vuv-f: in die Geschwindigkeitsberechnungsvorrichtung eingegebener Wert
A: Wechselspannungsamplitude
w: Wechselspannungsdrehwinkelfrequenz
t: Zeit ist.

**13.** Raddurchmessermessvorrichtung eines Elektrofahrzeugs nach Anspruch 1, **dadurch gekennzeichnet, dass** der durch das Berechnungsteil (5, 5a, 5b) berechnete Raddurchmesser als Verwaltungsinformation verwendet wird, indem der Raddurchmesser an eine Fahrzeuggetriebesteuerung oder ein Antriebssteuersystem übertragen wird.

**14.** Raddurchmessermessvorrichtung eines Elektrofahrzeugs nach Anspruch 1, **dadurch gekennzeichnet, dass** das Berechnungsteil (5, 5a, 5b)umfasst:

eine Geschwindigkeitserfassungsvorrichtung (30, 60, 80) zum Erfassen einer Geschwindigkeit eines nicht antreibenden Rads, das nicht direkt durch den Synchronmotor (2) angetrieben ist;
eine Offset-Ausgleichsvorrichtung (20, 20a, 20b) zum Berechnen eines durchschnittlichen Offset-Betrags der Spannungserfassungsvorrichtung (4, 4a, 4b) und zum Ausgeben eines Werts, der erhaltern wird, indem der durchschnittliche Offset-Betrag aus der durch die Spannungserfassungsvorrichtung (4, 4a, 4b) erfasste Wechselspannung eliminiert wird; und
eine Fehlererfassungsvorrichtung (50, 70, 90) zum Vergleichen eines vorbestimmten Werts mit dem Erfassungswert der Geschwindigkeitserfassungsvorrichtung (30, 60, 80) und zum Vergleichen des Ausgangswerts der Offset-Ausgleichsvorrichtung mit dem durchschnittlichen Offset-Betrag der Spannungserfassungsvorrichtung (4, 4a, 4b) und zum Erfassen eines Fehlers der Spannungserfassungsvorrichtung (4, 4a, 4b).

## Revendications

**1.** Appareil de mesure de diamètre de roue (3, 3a, 3b) d'un véhicule électrique comprenant un moteur synchrone (2) entraîné par un convertisseur de puissance électrique (1) pour convertir une tension CC en une tension CA, **caractérisé en ce qu'**il comprend :

un détecteur de tension (4, 4a, 4b) pour détecter une tension CA générée par un champ magnétique du moteur synchrone (2) pendant la marche en roue libre du véhicule électrique durant laquelle le convertisseur de puissance électrique (1) s'arrête, et
une partie de calcul (5, 5a, 5b) pour calculer un diamètre de roue (7a, 7b) d'une roue entraînée par le moteur synchrone (2) à partir d'une tension CA détectée par le détecteur de tension (4, 4a, 4b) et des informations de vitesse concernant le véhicule électrique.

**2.** Appareil de mesure de diamètre de roue d'un véhicule électrique selon la revendication 1, **caractérisé en ce que** la partie de calcul comprend un détecteur de vitesse (8) pour détecter une vitesse d'une roue non motrice qui n'est pas entraînée directement par le moteur synchrone (2), et un détecteur de panne (50) pour comparer une valeur prédéterminée à la valeur de détection du détecteur de vitesse (8) et détecter une panne du détecteur de tension (4, 4a, 4b).

**3.** Appareil de mesure de diamètre de roue d'un véhicule électrique selon la revendication 1, **caractérisé en ce que** la partie de calcul (5, 5a, 5b) comprend un calculateur de vitesse (60, 80) pour calculer une fréquence d'angle rotationnel et élimine une tension de décalage d'une tension CA détectée par le détecteur de tension (4, 4a, 4b).

**4.** Appareil de mesure de diamètre de roue d'un véhicule électrique selon la revendication 1, **caractérisé en ce que** la partie de calcul (5, 5a, 5b) comprend un compensateur de décalage (20, 20a, 20b) pour calculer une quantité de décalage moyenne du détecteur de tension (4, 4a, 4b) alors que le moteur synchrone (2) ne tourne pas et éliminer la quantité de décalage moyenne d'une tension CA détectée par le détecteur de tension (4, 4a, 4b).

**5.** Appareil de mesure de diamètre de roue d'un véhicule électrique selon la revendication 1, **caractérisé en ce que** la partie de calcul (5, 5a, 5b) comprend un calculateur de vitesse (60, 80) pour effectuer le traitement de calcul différentiel d'une tension CA détectée par le détecteur de tension (4, 4a, 4b) et éliminer une tension de décalage du détecteur de tension (4, 4a, 4b).

**6.** Appareil de mesure de diamètre de roue d'un véhicule électrique selon la revendication 1, **caractérisé en ce que** le détecteur de tension (4, 4a, 4b) est constitué d'un premier détecteur de tension (4a) et d'un second détecteur de tension (4b) pour détecter des tensions de ligne de deux endroits différents appliquées au moteur synchrone (2), et la partie de calcul (5, 5a, 5b) calcule un diamètre de roue d'une roue (7a, 7b) entraînée par le moteur synchrone (2) à partir des tensions CA détectées par le premier détecteur de tension (4a) et le second détecteur de tension (4b) et des informations de vitesse concernant le véhicule électrique.

7. Appareil de mesure de diamètre de roue d'un véhicule électrique selon la revendication 6, **caractérisé en ce que** la partie de calcul (5, 5a, 5b) comprend un détecteur de panne (50, 70, 90) pour comparer une valeur prédéterminée aux valeurs de détection du premier détecteur de tension (4a) et du second détecteur de tension (4b) et détecter des anomalies du premier détecteur de tension (4a) et du second détecteur de tension (4b).

8. Appareil de mesure de diamètre de roue d'un véhicule électrique selon la revendication 7, **caractérisé en ce que** le détecteur de panne (50, 70, 90) comprend un premier détecteur de panne et un second détecteur de panne pour comparer respectivement une valeur prédéterminée avec des valeurs de détection du premier détecteur de tension (4a) et du second détecteur de tension (4b), et la partie de calcul détecte une anomalie du moteur synchrone (2) ou du premier détecteur de tension (4a) ou du second détecteur de tension (4b) sur la base de sorties du premier détecteur de panne et du second détecteur de panne.

9. Appareil de mesure de diamètre de roue d'un véhicule électrique selon l'une quelconque des revendications 1 à 8, **caractérisé en ce qu'**il comprend une partie de correction de diamètre de roue (100) pour corriger une valeur de commande de couple pour commander le convertisseur de puissance électrique (1) selon un diamètre de roue calculé par la partie de calcul (5, 5a, 5b).

10. Appareil de mesure de diamètre de roue d'un véhicule électrique selon la revendication 9, **caractérisé en ce que** la partie de correction de diamètre de roue (100) comprend un limiteur pour définir un gain de correction de diamètre de roue dans lequel un diamètre de roue calculé par la partie de calcul (5, 5a, 5b) est divisé par un diamètre de roue de référence à l'intérieur d'une plage prédéterminée.

11. Appareil de mesure de diamètre de roue d'un véhicule électrique selon la revendication 4, **caractérisé en ce que** la partie de calcul (5, 5a, 5b) comprend un calculateur de vitesse (50, 60, 80) qui effectue le calcul décrit dans la formule 1 :

$$\frac{(Vuv - of)''}{Vuv - of} = \frac{-A \cdot \omega^2 \cdot \sin(\omega \cdot t)}{A \sin(\omega \cdot t)} = -\omega^2 \cdots (1)$$

où
Vuv-of : valeur entrée dans le calculateur de vitesse
A : amplitude de la tension CA
ω : fréquence d'angle rotationnel de la tension CA
t : temps.

12. Appareil de mesure de diamètre de roue d'un véhicule électrique selon la revendication 5, **caractérisé en ce que** le calculateur de vitesse (30, 60, 80) effectue le calcul décrit dans la formule 2 :

$$\frac{(Vuv - f)''''}{(Vuv - f)''} = \frac{A \cdot \omega^4 \cdot \sin(\omega \cdot t)}{-A \cdot \omega^2 \cdot \sin(\omega \cdot t)} = -\omega^2 \cdots (2)$$

où
Vuv-f : valeur entrée dans le calculateur de vitesse
A : amplitude de la tension CA
ω : fréquence d'angle rotationnel de la tension CA
t : temps.

13. Appareil de mesure de diamètre de roue d'un véhicule électrique selon la revendication 1, **caractérisé en ce que** le diamètre de roue calculé par la partie de calcul (5, 5a, 5b) est utilisé en tant qu'informations de gestion en transmettant le diamètre de roue à un contrôleur d'entraînement de véhicule ou un système de contrôle de conduite.

14. Appareil de mesure de diamètre de roue d'un véhicule électrique selon la revendication 1, **caractérisé en ce que** la partie de calcul (5, 5a, 5b) comprend :

un détecteur de vitesse (30, 60, 80) pour détecter une vitesse d'une roue non motrice qui n'est pas entraînée directement par le moteur synchrone (2) ;
un compensateur de décalage (20, 20a, 20b) pour calculer une quantité de décalage moyenne du détecteur de tension (4, 4a, 4b) et produire en sortie une valeur obtenue en éliminant la quantité de décalage moyenne de la tension CA détectée par le détecteur de tension (4, 4a, 4b) ; et
un détecteur de panne (50, 70, 90) pour comparer une valeur prédéterminée à la valeur de détection du détecteur de vitesse (30, 60, 80) et comparer la valeur produite en sortie du compensateur de décalage à la quantité de décalage moyenne du détecteur de tension (4, 4a, 4b) et détecter une panne du détecteur de tension (4, 4a, 4b).

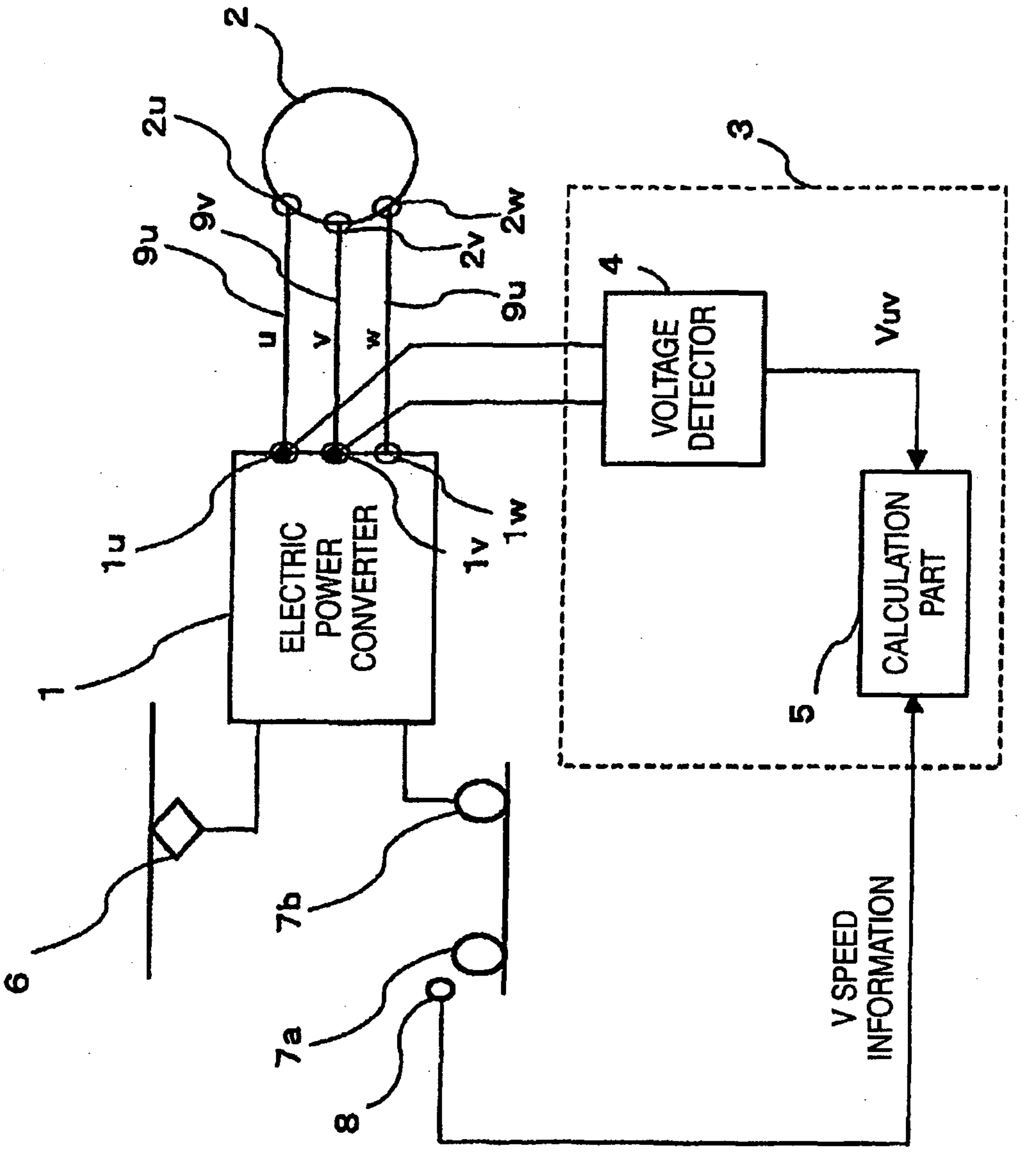
2
2u
9v
9u
2w
2v
9u
u
v
w
3
4
VOLTAGE DETECTOR
Vuv
1u
1v
1w
ELECTRIC POWER CONVERTER
1
CALCULATION PART
5
6
7b
7a
8
V SPEED INFORMATION

FIG. 1

FIG. 2

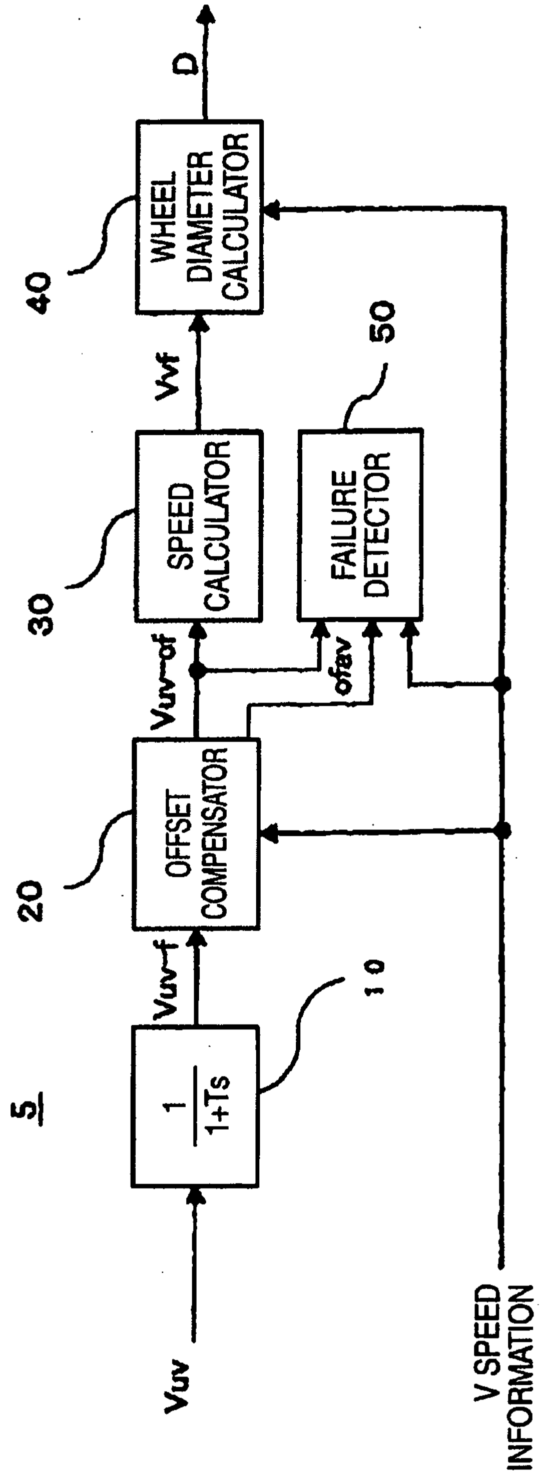
5
Vuv
1
1+Ts
10
Vuv-f
20
OFFSET
COMPENSATOR
Vuv-of
30
SPEED
CALCULATOR
Vvf
40
WHEEL
DIAMETER
CALCULATOR
D
50
FAILURE
DETECTOR
ofav
V SPEED
INFORMATION

FIG. 3

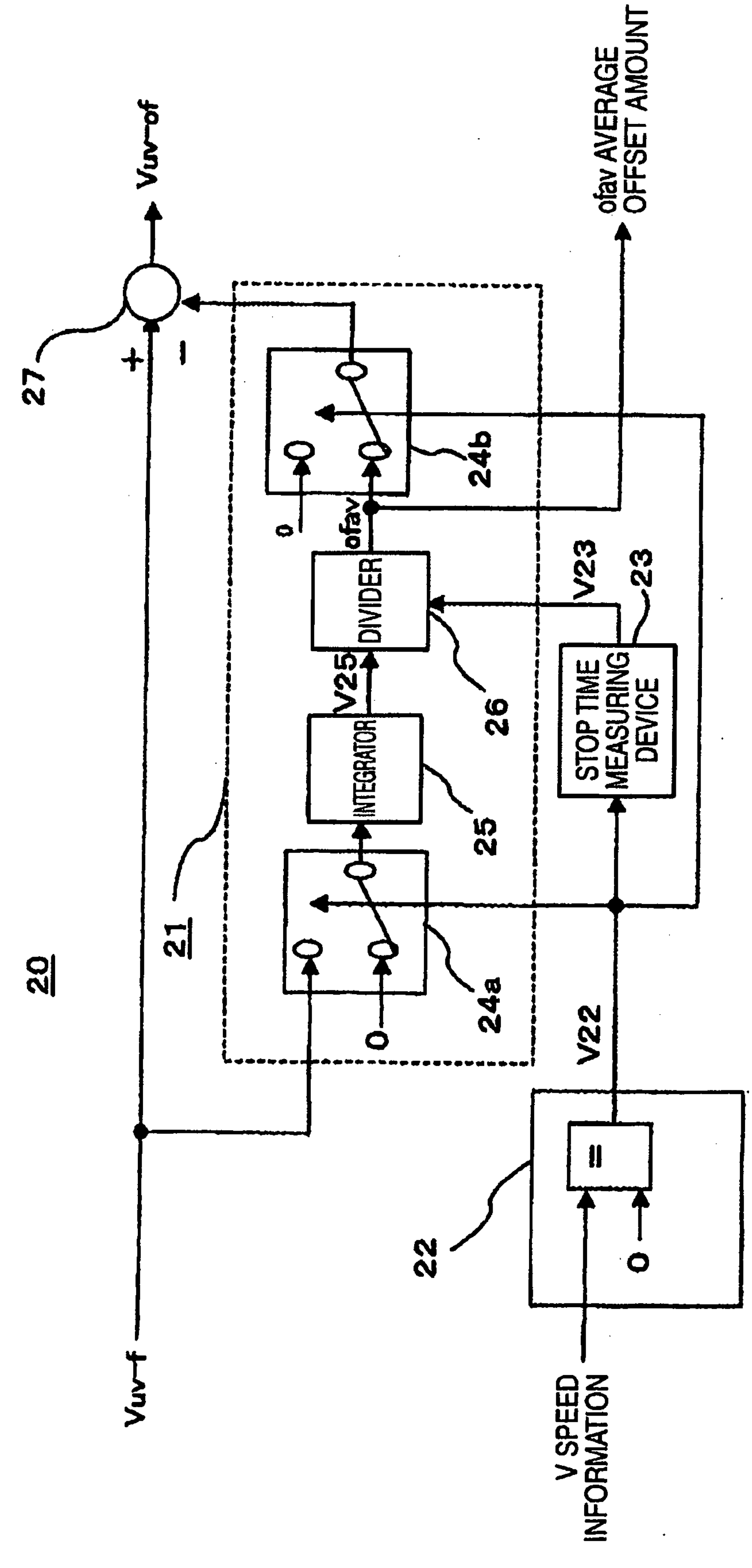
20
21
22
23
24a
24b
25
26
27
Vuv-f
Vuv-of
+
−
0
V22
V23
V25
ofav
INTEGRATOR
DIVIDER
STOP TIME MEASURING DEVICE
=
V SPEED INFORMATION
ofav AVERAGE OFFSET AMOUNT

FIG. 4

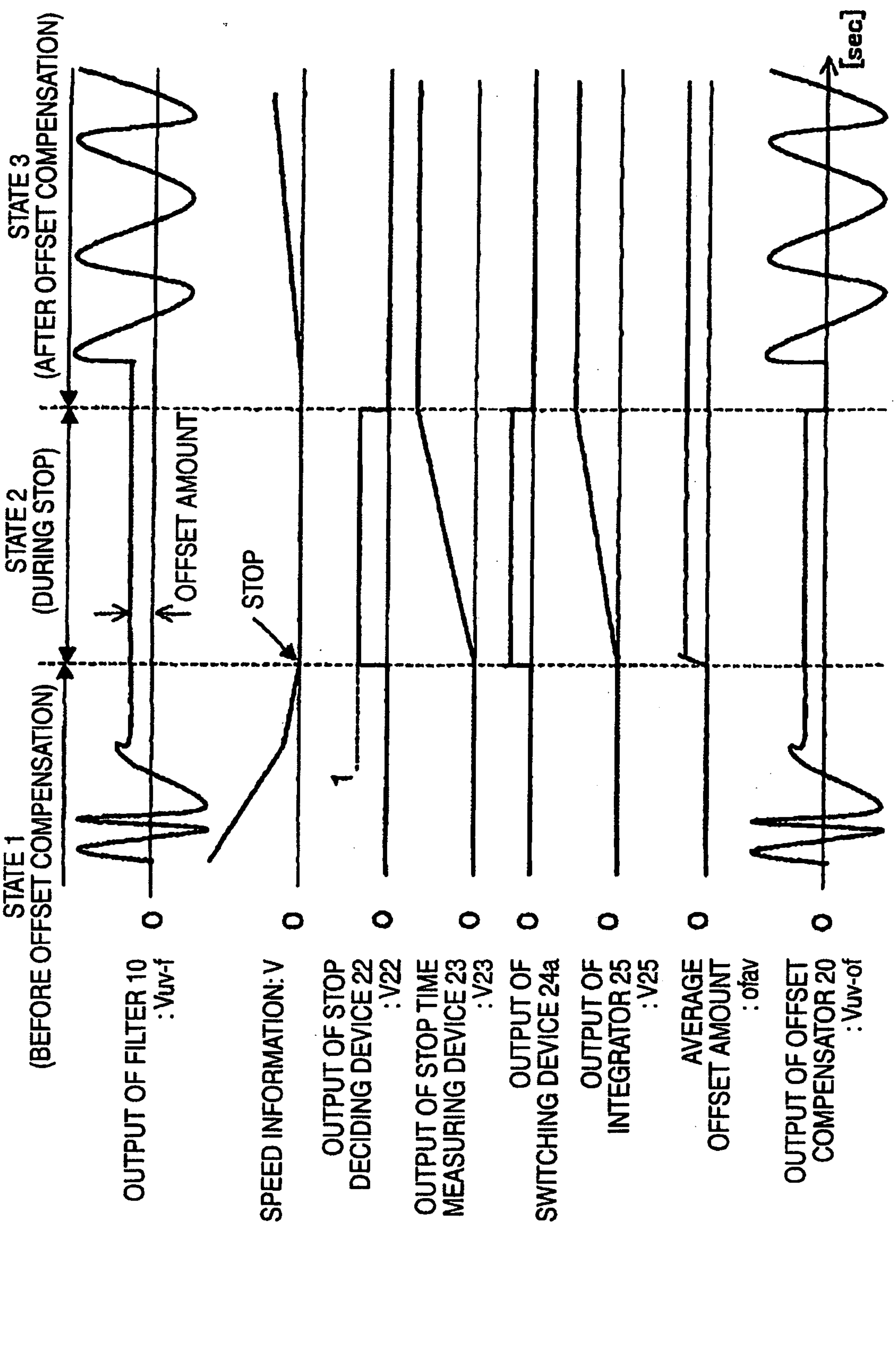
STATE 1
(BEFORE OFFSET COMPENSATION)
STATE 2
(DURING STOP)
STATE 3
(AFTER OFFSET COMPENSATION)
OUTPUT OF FILTER 10
: Vuv-f
OFFSET AMOUNT
STOP
SPEED INFORMATION: V
OUTPUT OF STOP
DECIDING DEVICE 22
: V22
OUTPUT OF STOP TIME
MEASURING DEVICE 23
: V23
OUTPUT OF
SWITCHING DEVICE 24a
OUTPUT OF
INTEGRATOR 25
: V25
AVERAGE
OFFSET AMOUNT
: ofav
OUTPUT OF OFFSET
COMPENSATOR 20
: Vuv-of
0
1
[sec]

FIG. 5

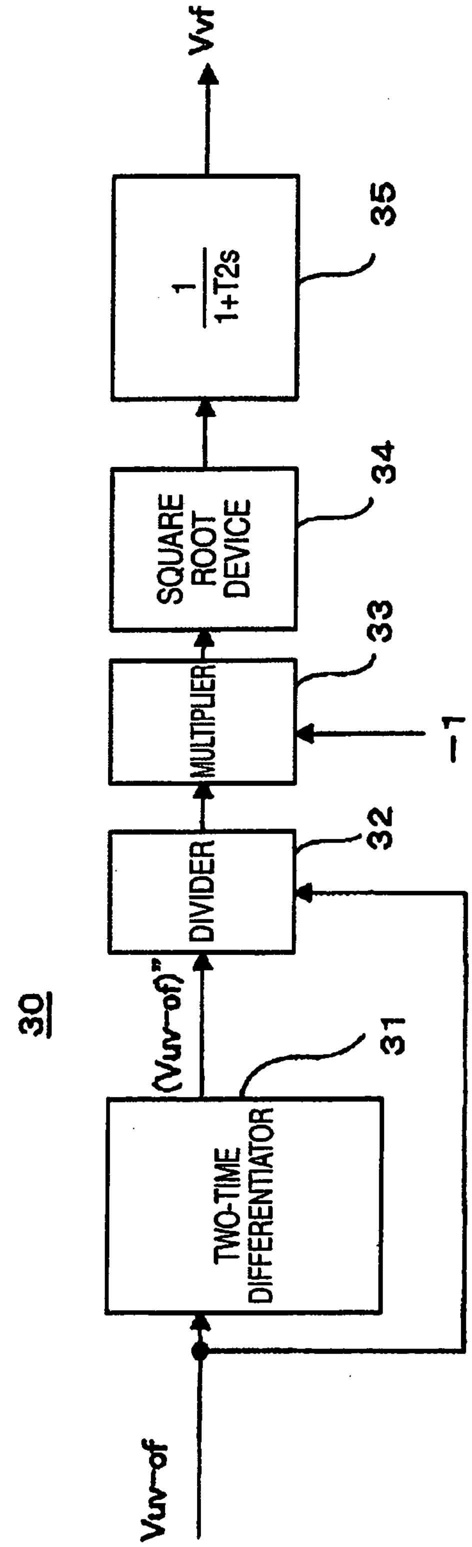
30
Vuv−of
TWO-TIME DIFFERENTIATOR
31
(Vuv−of)"
DIVIDER
32
MULTIPLIER
33
−1
SQUARE ROOT DEVICE
34
1
1+T2s
35
Vvf

FIG. 6

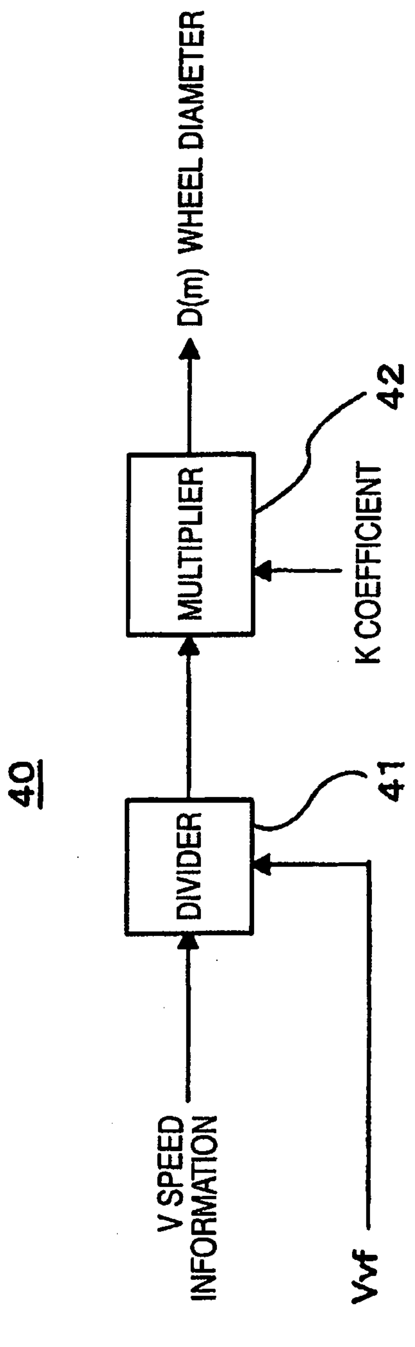
40
V SPEED INFORMATION
Vvf
DIVIDER
41
MULTIPLIER
42
K COEFFICIENT
D(m) WHEEL DIAMETER

FIG. 7

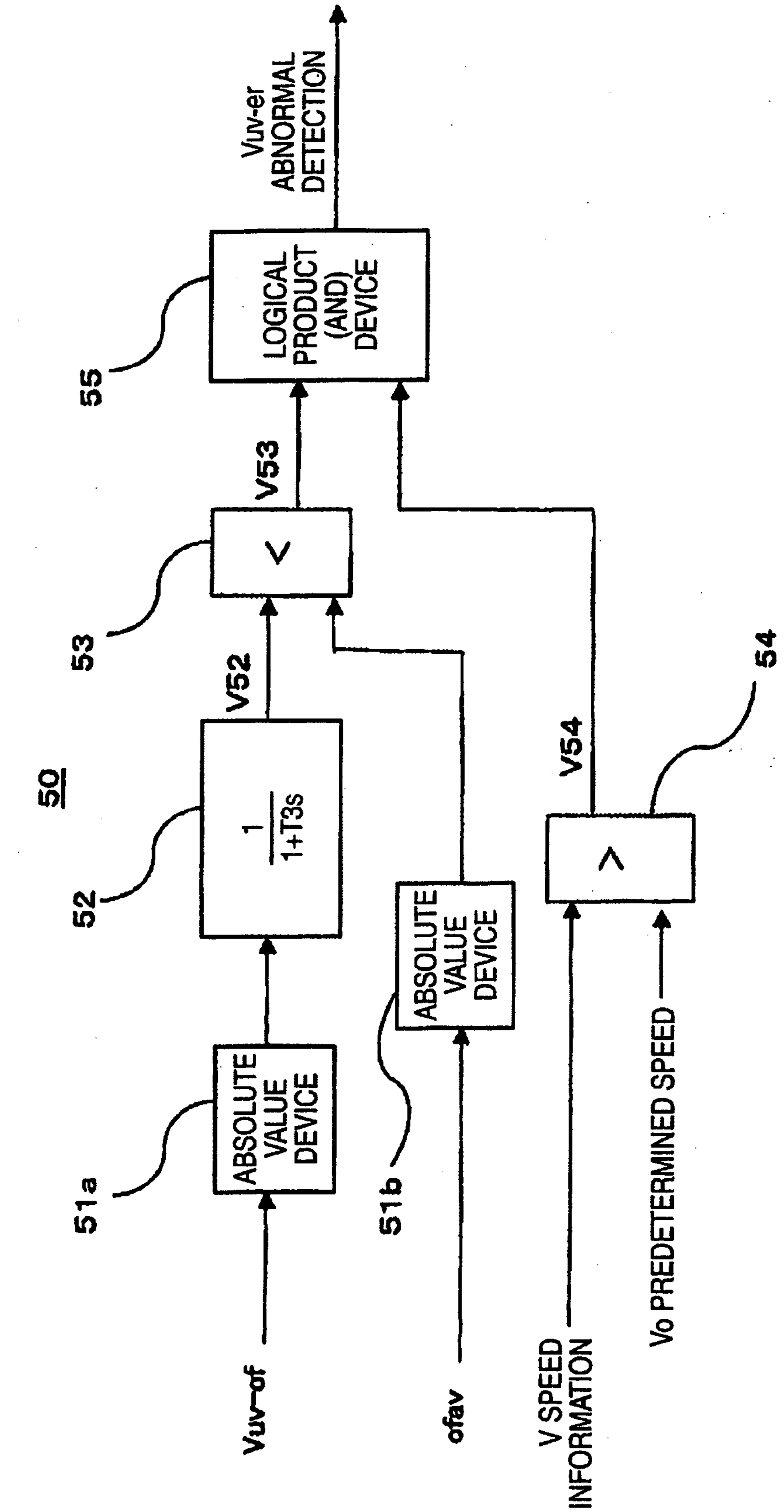
50
Vuv-αf
51a
ABSOLUTE VALUE DEVICE
52
1/(1+T3s)
V52
53
<
V53
55
LOGICAL PRODUCT (AND) DEVICE
Vuv-er ABNORMAL DETECTION
αfav
51b
ABSOLUTE VALUE DEVICE
V SPEED INFORMATION
Vo PREDETERMINED SPEED
54
>
V54

FIG. 8

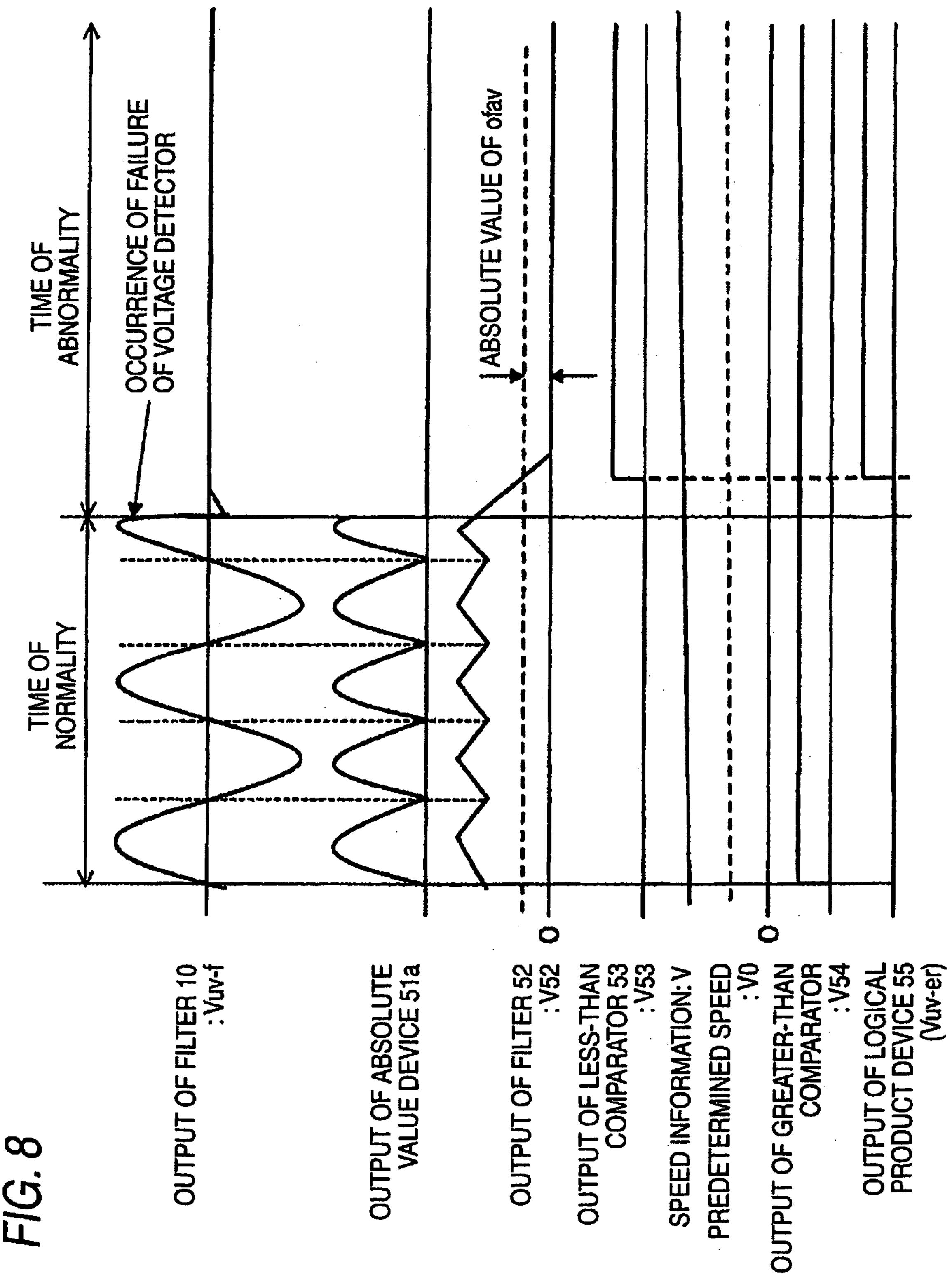
TIME OF NORMALITY
TIME OF ABNORMALITY
OCCURRENCE OF FAILURE OF VOLTAGE DETECTOR
ABSOLUTE VALUE OF σfav
OUTPUT OF FILTER 10 : Vuv-f
OUTPUT OF ABSOLUTE VALUE DEVICE 51a
OUTPUT OF FILTER 52 : V52
0
OUTPUT OF LESS-THAN COMPARATOR 53 : V53
SPEED INFORMATION: V
PREDETERMINED SPEED : V0
0
OUTPUT OF GREATER-THAN COMPARATOR : V54
OUTPUT OF LOGICAL PRODUCT DEVICE 55 (Vuv-er)

FIG. 9

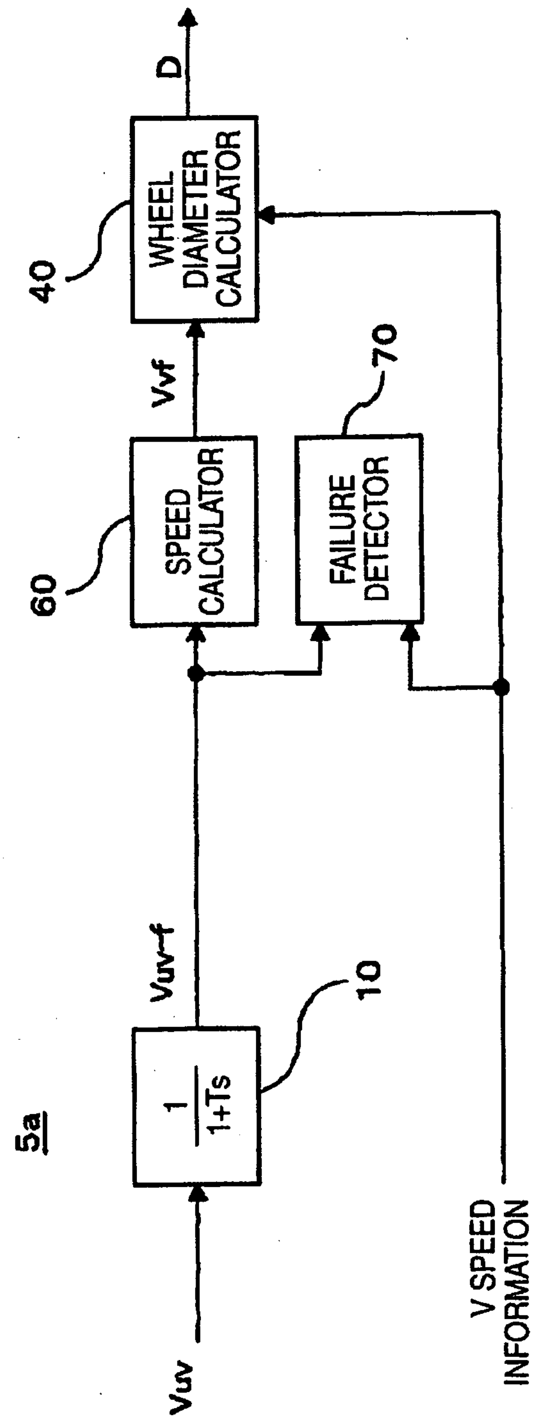
5a
Vuv
1
1+Ts
10
Vuv-f
60
SPEED CALCULATOR
70
FAILURE DETECTOR
Vvf
40
WHEEL DIAMETER CALCULATOR
D
V SPEED INFORMATION

FIG. 10

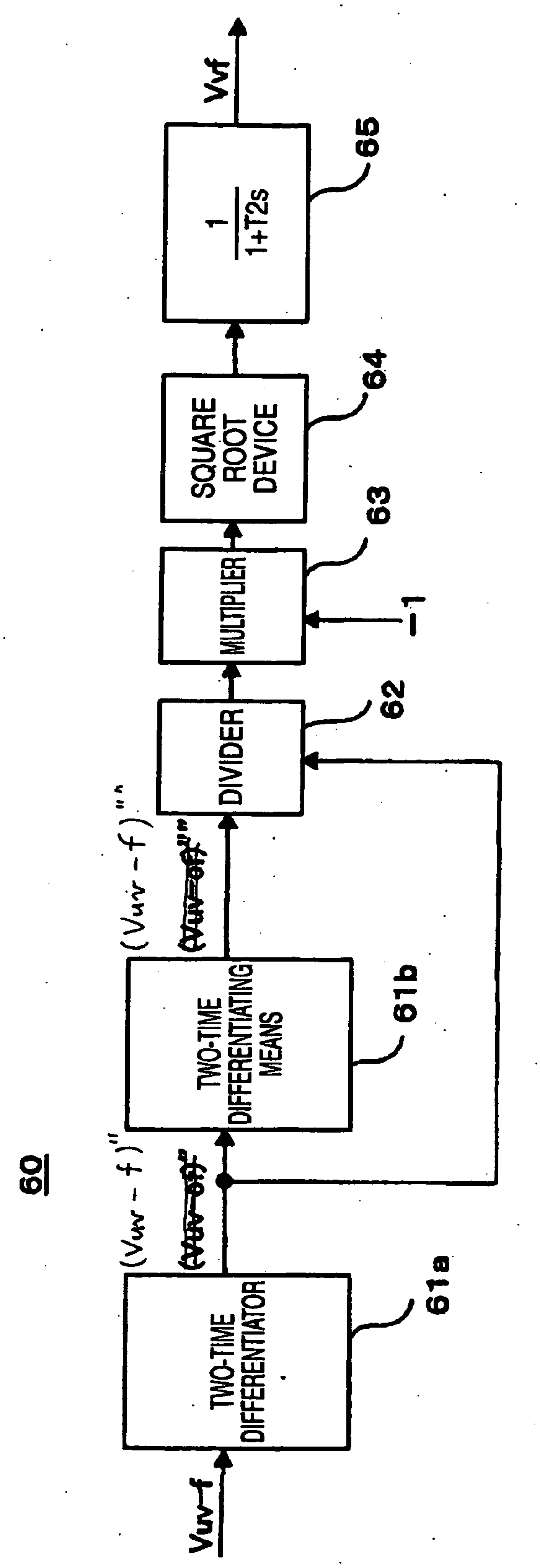
60
Vuv-f
TWO-TIME DIFFERENTIATOR
61a
(Vuv - f)''
TWO-TIME DIFFERENTIATING MEANS
61b
(Vuv - f)''''
DIVIDER
62
MULTIPLIER
63
-1
SQUARE ROOT DEVICE
64
1/(1+T2s)
65
Vvf

FIG. 11

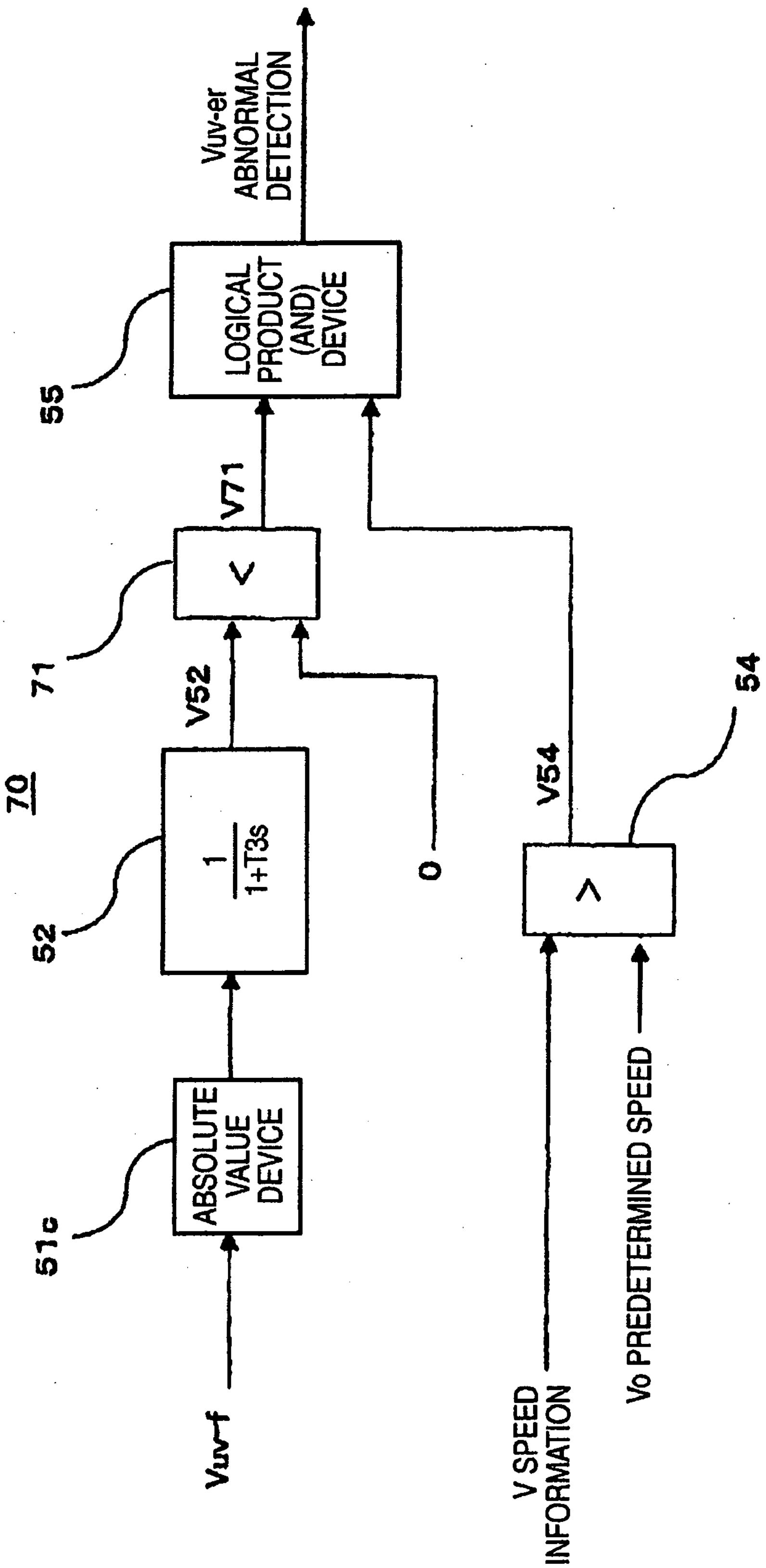
Vuv-f
51c
ABSOLUTE VALUE DEVICE
52
1/(1+T3s)
70
V52
71
<
0
V71
55
LOGICAL PRODUCT (AND) DEVICE
Vuv-er ABNORMAL DETECTION
V SPEED INFORMATION
Vo PREDETERMINED SPEED
>
54
V54

FIG. 12

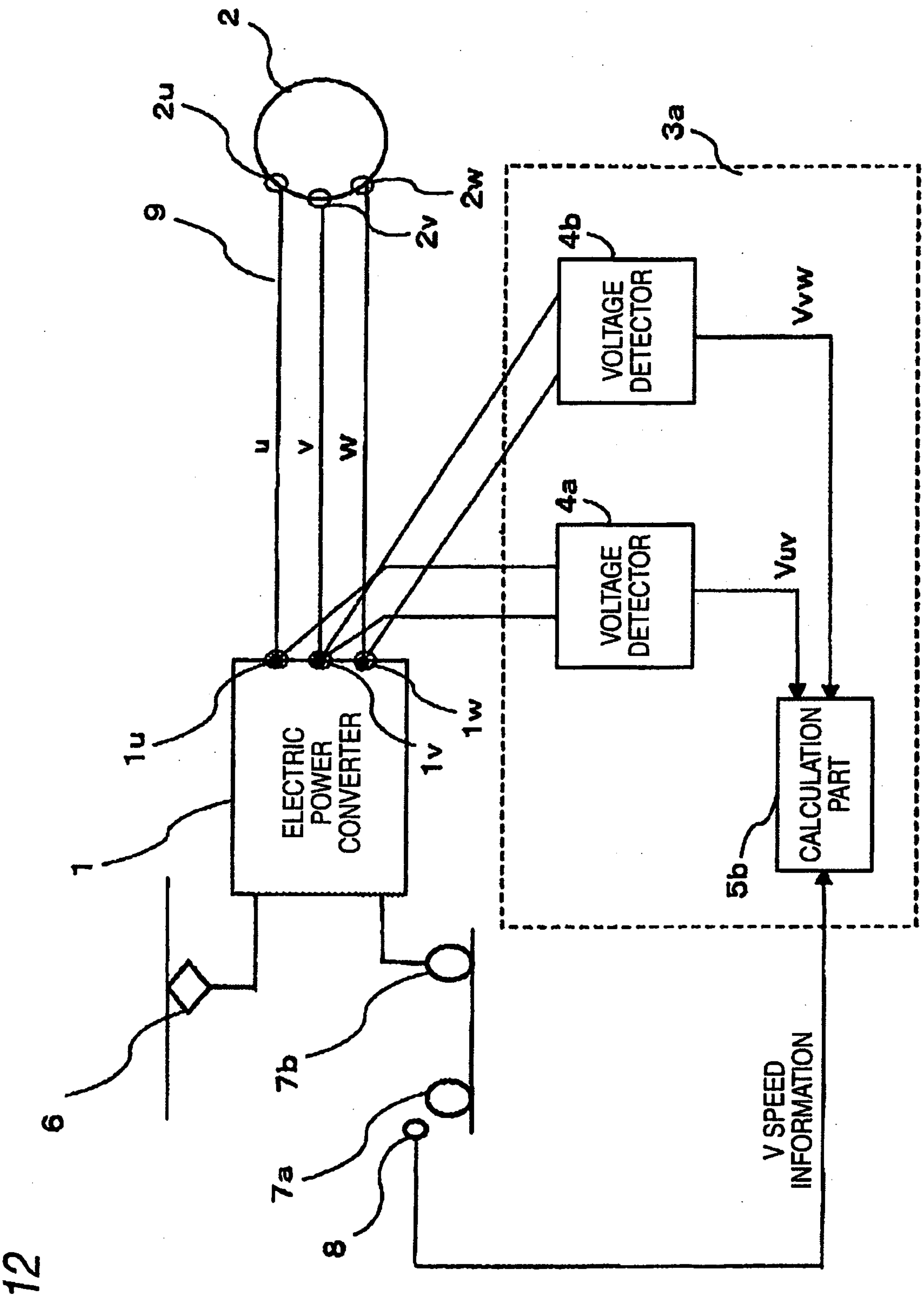

2
2u
2v
2w
9
u
v
w
3a
4a
4b
VOLTAGE DETECTOR
VOLTAGE DETECTOR
Vuv
Vvw
1
1u
1v
1w
ELECTRIC POWER CONVERTER
5b
CALCULATION PART
6
7a
7b
8
V SPEED INFORMATION

FIG. 13

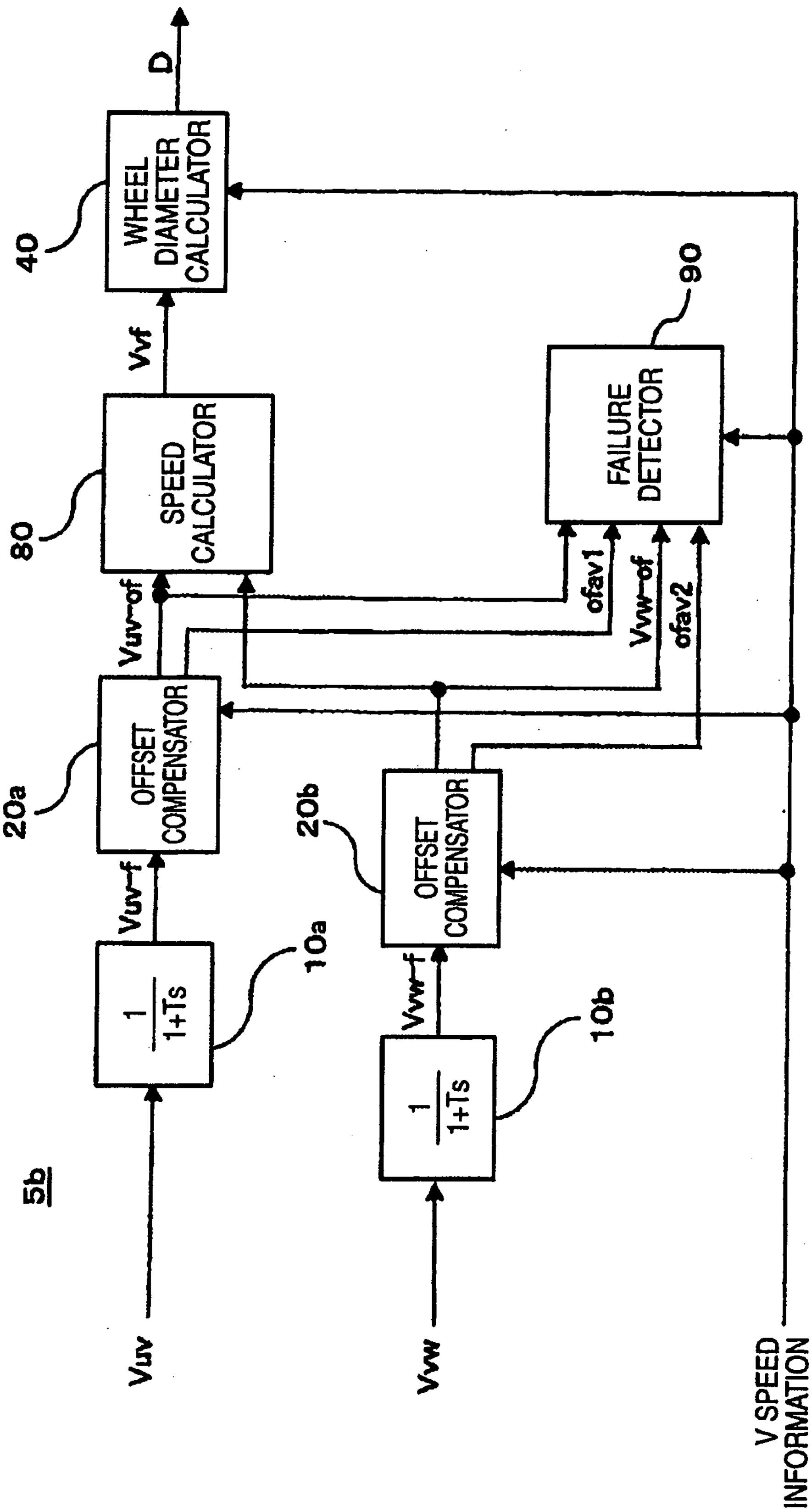
5b
Vuv
Vvw
V SPEED INFORMATION
1/(1+Ts)
10a
1/(1+Ts)
10b
Vuv-f
Vvw-f
OFFSET COMPENSATOR
20a
OFFSET COMPENSATOR
20b
Vuv-of
Vvw-of
ofav1
ofav2
SPEED CALCULATOR
80
FAILURE DETECTOR
90
Vvf
WHEEL DIAMETER CALCULATOR
40
D

FIG. 14

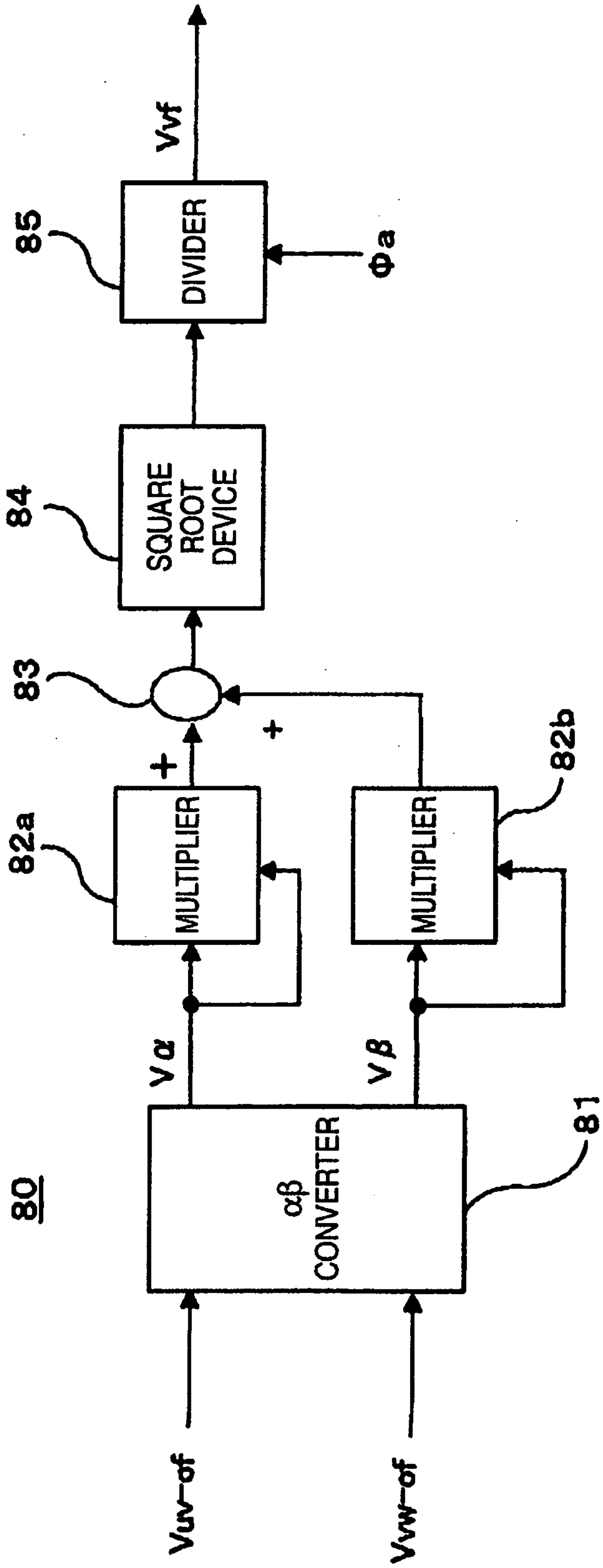
80
Vuv-of
Vvw-of
αβ CONVERTER
81
Vα
Vβ
MULTIPLIER
82a
MULTIPLIER
82b
+
+
83
SQUARE ROOT DEVICE
84
DIVIDER
85
Φa
Vvf

FIG. 15

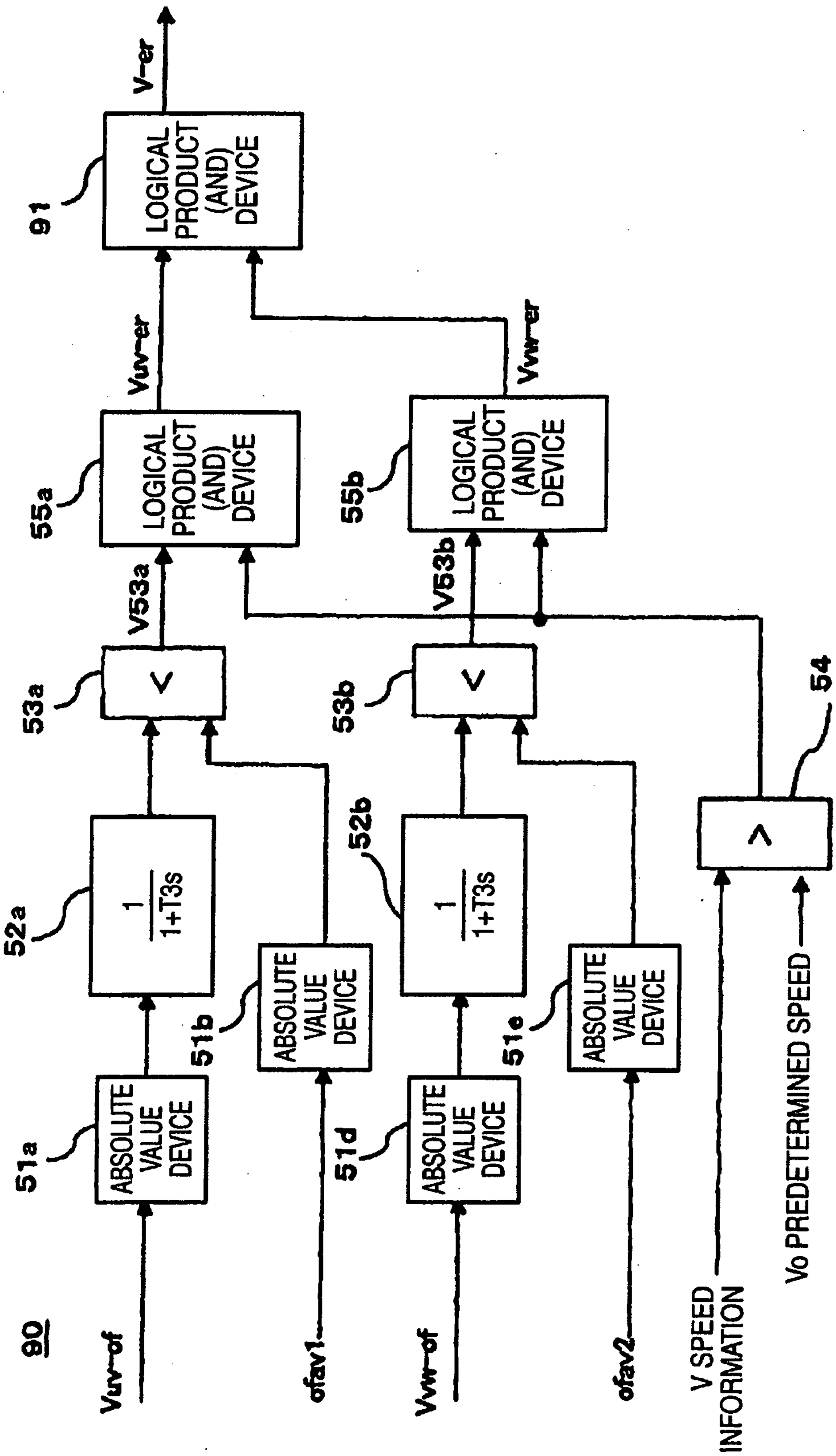
90
Vuv-of
ofav1
Vvw-of
ofav2
V SPEED INFORMATION
Vo PREDETERMINED SPEED
51a
ABSOLUTE VALUE DEVICE
51b
ABSOLUTE VALUE DEVICE
51d
ABSOLUTE VALUE DEVICE
51e
ABSOLUTE VALUE DEVICE
52a
1/1+T3s
52b
1/1+T3s
53a
53b
54
V53a
V53b
55a
LOGICAL PRODUCT (AND) DEVICE
55b
LOGICAL PRODUCT (AND) DEVICE
Vuv-er
Vvw-er
91
LOGICAL PRODUCT (AND) DEVICE
V-er

FIG. 16

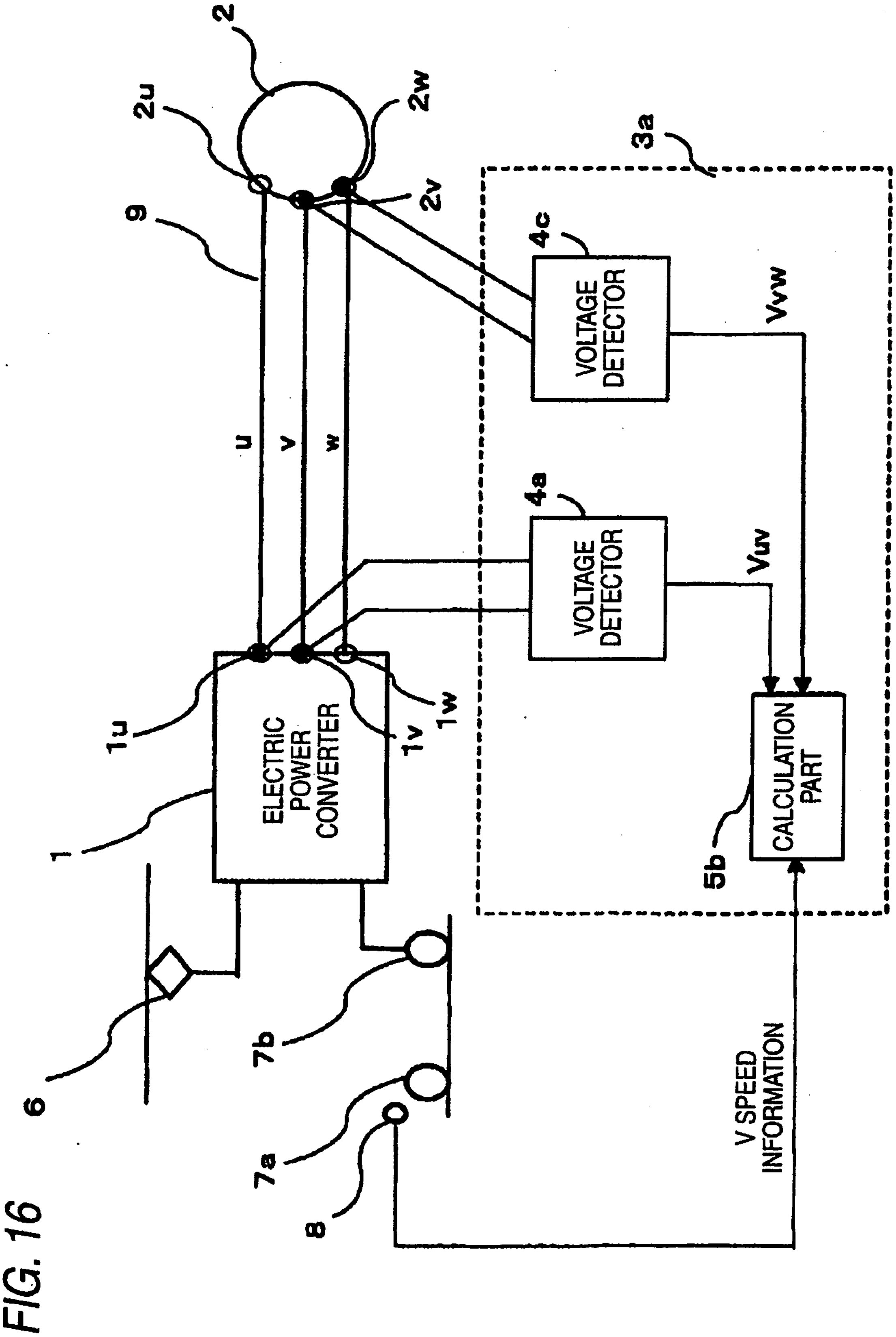
2
2u
2w
2v
3a
9
4c
VOLTAGE DETECTOR
Vvw
u
v
w
4a
VOLTAGE DETECTOR
Vuv
1u
1v
1w
ELECTRIC POWER CONVERTER
1
CALCULATION PART
5b
6
7b
7a
8
V SPEED INFORMATION

FIG. 17

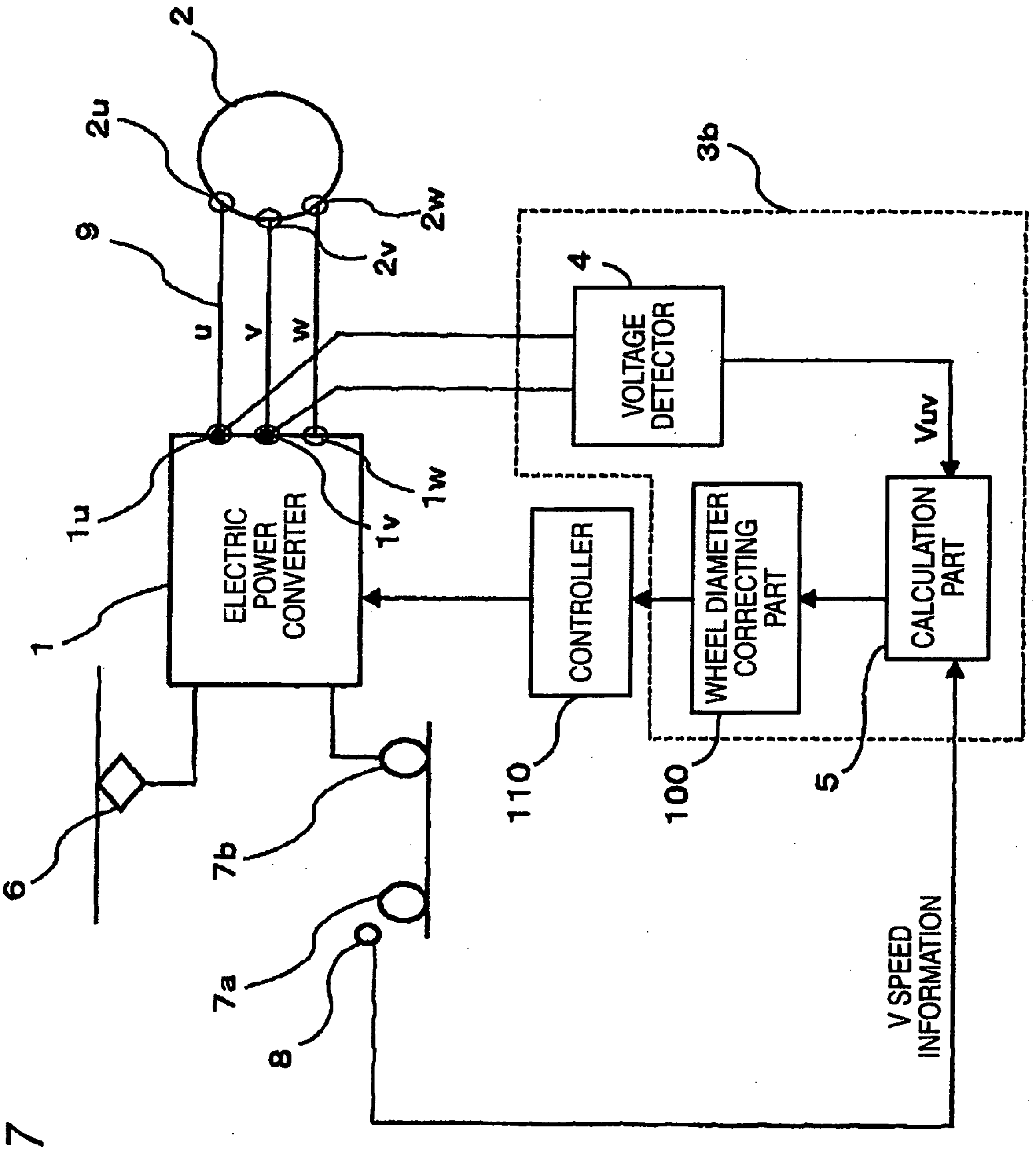
ELECTRIC POWER CONVERTER
VOLTAGE DETECTOR
CONTROLLER
WHEEL DIAMETER CORRECTING PART
CALCULATION PART
Vuv
V SPEED INFORMATION
1
1u
1v
1w
2
2u
2v
2w
3b
4
5
6
7a
7b
8
9
u
v
w
100
110

FIG. 18

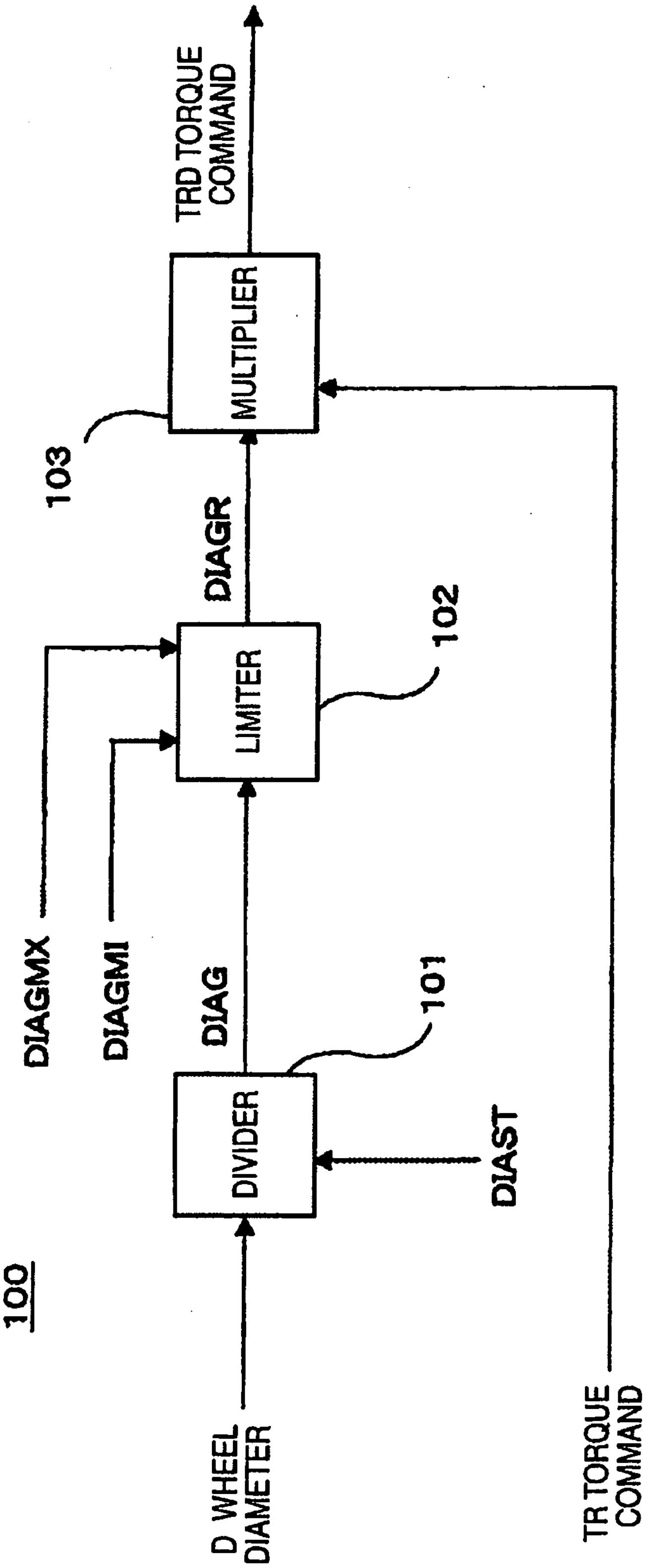
100
D WHEEL DIAMETER
DIVIDER
DIAST
101
DIAG
DIAGMX
DIAGMI
LIMITER
102
DIAGR
103
MULTIPLIER
TRD TORQUE COMMAND
TR TORQUE COMMAND

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CH 688728 A
- JP 60210101 A
- JP 2005312126 A